(19) Europäisches Patentamt / European Patent Office / Office européen des brevets

(11) **EP 3 178 876 B1**

(12) **EUROPEAN PATENT SPECIFICATION**

(45) Date of publication and mention of the grant of the patent:
**21.10.2020 Bulletin 2020/43**

(21) Application number: **16202528.2**

(22) Date of filing: **06.12.2016**

(51) Int Cl.:
*C08K 9/06* (2006.01)
*C08K 9/02* (2006.01)
*C08K 3/36* (2006.01)
*C08K 3/22* (2006.01)
*C08L 83/04* (2006.01)
*C09C 3/12* (2006.01)
*C09C 3/00* (2006.01)

(54) **INORGANIC PARTICLE-POLYSILOXANE COMPOSITE, DISPERSION AND SOLID MATERIAL CONTAINING THE COMPOSITE, AND MAKING METHOD**

ANORGANISCHE POLYSILOXANVERBUNDSTOFFPARTIKEL, DISPERSION UND FESTSTOFF MIT DEM VERBUNDSTOFF SOWIE HERSTELLUNGSVERFAHREN

COMPOSITE DEPOLYSILOXANE PARTICULAIRE INORGANIQUE, DISPERSION ET MATÉRIAU SOLIDE CONTENANT LE COMPOSITE ET PROCÉDÉ DE FABRICATION

(84) Designated Contracting States:
**DE FR GB**

(30) Priority: **08.12.2015 JP 2015239303**

(43) Date of publication of application:
**14.06.2017 Bulletin 2017/24**

(73) Proprietor: **Shin-Etsu Chemical Co., Ltd.**
**Tokyo (JP)**

(72) Inventors:
- **YOSHII, Ryosuke**
  **Annaka-shi,, Gunma (JP)**
- **MASUDA, Kohei**
  **Annaka-shi,, Gunma (JP)**
- **HIGUCHI, Koichi**
  **Annaka-shi,, Gunma (JP)**
- **KIMURA, Tsuneo**
  **Annaka-shi,, Gunma (JP)**

(74) Representative: **Mewburn Ellis LLP**
**Aurora Building**
**Counterslip**
**Bristol BS1 6BX (GB)**

(56) References cited:
**DE-A1-102006 033 136**
**US-A- 3 700 473**
**US-A- 5 188 899**
**US-A1- 2015 021 643**
**US-A1- 2015 118 483**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 178 876 B1

## Description

### TECHNICAL FIELD

This invention relates to an inorganic particle-polysiloxane composite, a dispersion containing the composite, a solid material containing the composite, and a method of preparing the composite. More particularly, it relates to a material in the form of inorganic particles having a polysiloxane grafted to their surface, which exhibits transparency and weather resistance of silicone as well as functionalities of inorganic particles.

### BACKGROUND

Because of excellent transparency and weather resistance, silicone materials are used in a variety of applications. Recent efforts are made to convert conventional silicone materials to functionalized silicone materials by introducing therein a component having a certain functionality such as light absorption, heat resistance, electric conduction or magnetism. For example, Patent Document 1 discloses a UV-absorbing coating composition having a UV-absorbing organic molecule introduced therein, and Patent Document 2 discloses a heat resistant silicone rubber material loaded with an inorganic filler.

In the preparation of functionalized silicone materials, the functionalizing components to be introduced are generally divided into organic molecules and inorganic particles. Many organic molecules are fully compatible with silicone materials so that highly transparent materials are obtainable. However, since organic molecules are less weather resistant than the silicone materials, function degradation and discoloration during long-term service are unavoidable. On the other hand, most inorganic particles exhibit more weather resistance than the silicone materials, so the risks of function degradation and discoloration during long-term service are minimized. However, since inorganic particles are less compatible with or dispersible in siloxane materials, they tend to agglomerate after introduction, resulting in a substantial loss of transparency and functionality.

The stable dispersion of inorganic particles in silicone oil is difficult for the reason (1) that since silicone oil is a non-polar liquid, inorganic particles which are typically hydrophilic tend to agglomerate and the reason (2) that in a viscous liquid like silicone oil, diffusion motion of inorganic particles by Brownian motion is weak and so dispersion is inhibited. Thus the preparation of a transparent functional silicone material having inorganic particles stably dispersed therein is difficult as compared with other organic oils and resins. It is thus believed difficult to prepare a transparent silicone oil or rubber material based on a high-molecular-weight silicone oil and loaded with inorganic particles.

Among the means for improving the dispersibility of inorganic particles in organic solvents, one effective approach is to modify the particle surface with a substituent group having a large excluded volume for thereby avoiding direct contact between particles. It is recently reported to treat inorganic particles on their surface with a silane. The thus surface-treated inorganic particles have high dispersibility in organic solvents. The inventors previously proposed in Patent Document 3 to obtain an alcohol dispersion having a particle size of nano order by reacting a water dispersion of nano-particulate titanium oxide coated with silicon oxide hydrate with a silane coupling agent. The nanoparticles obtained from this method are fully dispersible in polar organic solvents such as alcohol and polyether solvents, but only with difficulty in silicone oil.

Patent Document 4 describes inorganic particles having polysiloxane grafted thereto which are synthesized by grinding and mixing a polysiloxane having a reactive group at one end and inorganic particles in toluene solvent on a sand mill. The thus treated inorganic particles are introduced in a silicone encapsulant. Grafting polysiloxane to surfaces of inorganic particles is effective for improving the dispersibility of inorganic particles. However, a polysiloxane compound which is precisely functionalized only at a single end must be synthesized in advance, which is undesirable from the aspect of working efficiency. Also, since the reactivity at a polymer terminus lowers with an increase of molecular weight, this technique is difficult to graft polysiloxane onto particles in a high density. A substantial limit is then imposed on the dispersibility of particles. Furthermore, this technique requires mechanical unit operation such as grinding to disperse inorganic particles. The grinding operation requires a large amount of energy. Once agglomerated particles can be largely changed in particle size distribution and particle shape from the state prior to agglomeration. The technique is thus disadvantageous in the industry.

An approach devoid of mechanical unit operation such as grinding is disclosed in Patent Document 5. Surface treatment of inorganic particles is carried out by reacting a previously synthesized polysiloxane in a methanol dispersion of inorganic particles. The polysiloxane which can be used in this technique is limited to a low-molecular-weight one which is dissolvable in methanol. It is described nowhere that the surface-treated inorganic particles are dispersible in silicone oil.

US2015/118483 discloses composite particles for a photocurable coating composition, in which inorganic core-shell particles with titanium oxide cores and silicon oxide shells are surface-treated with organosilane and organodisilazane.

Citation List

Patent Document 1: JP 5353843
Patent Document 2: JP-A 2013-035890
Patent Document 3: JP-A 2015-034106
Patent Document 4: JP 5472543 (US-A-2015/021643A)
Patent Document 5: WO 2013/094738

THE INVENTION

Considering the background art, the inventors encountered the following problems. In order to produce a transparent functional silicone composition having inorganic particles dispersed therein, an inorganic particulate material having high dispersibility in silicone oil is necessary. To this end, it would be effective to graft a high-molecular-weight polysiloxane to surfaces of inorganic particles in a high density. With the technique of grafting a single end functional polysiloxane having a high molecular weight as disclosed in Patent Document 4, it is difficult to graft the polysiloxane to surfaces of inorganic particles in a high density because the reactivity at the polymer terminus is poor. In addition, since many high-molecular-weight polysiloxanes are insoluble in polar solvents, they are difficult to react with hydrophilic inorganic particles while maintaining the dispersed state thereof. On the other hand, when the molecular weight of a siloxane oligomer to be reacted is controlled to such a level that it is soluble in polar solvents as described in Patent Document 5, no satisfactory dispersibility is expectable. It may be contemplated to disperse inorganic particles in a non-polar solvent by mechanical grinding treatment. This technique is disadvantageous in the industry because the grinding operation requires a large amount of energy, and once agglomerated, particles can be largely changed in particle size distribution and particle shape from the state prior to agglomeration.

A technique which solves the contradictory problems at the same time, offers useful results, and contributes to a development of the relevant industry has never been proposed.

An object herein is to provide a new inorganic particle-polysiloxane composite which can be dispersed in silicone fluid to form a transparent material; a method for preparing the composite; and a material possessing both the functionality of inorganic particles and the transparent and mechanical properties of silicone fluid.

Seeking for a functional silicone material having inorganic particles transparently dispersed therein, the inventors have found that by effecting ring-opening polymerization of a cyclic siloxane in a dispersion of inorganic particles in a polar organic solvent as dispersing medium, an inorganic particle-polysiloxane composite comprising inorganic particles having polysiloxane grafted to their surface, and which is transparently dispersible in a silicone oil, can be prepared without a need for mechanical treatment such as grinding. The inorganic particle-polysiloxane composite thus obtained is found to be fully dispersible in high-molecular-weight silicone oil. It is presumed that immediately after ring opening, the cyclic siloxane is grafted to surfaces of inorganic particles as a low-molecular-weight oligomer in a high density. As the system is concentrated by removing the dispersing medium, condensation proceeds, i.e. a high-molecular chain grows. As the dispersing medium is removed from the system so that the environment gradually turns hydrophobic, the polysiloxane covering the particles gradually converts from the oligomeric state to a high-molecular-weight state, indicating that the particles become more hydrophobic. As a consequence, from the state that particles are dispersed in the polar solvent, an inorganic particle-polysiloxane composite wherein inorganic particles are enclosed within silicone component is eventually obtained. The invention enables treatment of hydrophilic inorganic particles with a hydrophobic high-molecular-weight polysiloxane in a common reactor, which is believed difficult in the prior art, without a need for mechanical grinding treatment.

Accordingly, the invention provides an inorganic particle-polysiloxane composite which is dispersible in silicone oil, a dispersion containing the composite, a solid material containing the composite, and a method of preparing the composite, as defined below.

In one aspect as specified in claim 1, the invention provides an inorganic particle-polysiloxane composite comprising inorganic particles of core/shell structure having a core comprising at least one compound selected from aluminum oxide, cerium oxide, titanium oxide, zinc oxide, indium tin oxide, zirconium oxide, tin oxide and iron oxide and a shell of silicon oxide around the core, and having a 50% cumulative particle size of 1 to 200 nm on volume basis particle size distribution as measured by the dynamic light scattering method, and polysiloxane containing $SiR^2R^3O_{2/2}$ and $SiR^4R^5R^6O_{1/2}$ units grafted at least in part onto the particle surfaces, optionally via a siloxane coating layer containing $SiR^1O_{3/2}$ units, wherein the total amount of the siloxane constituents represented by $SiR^1O_{3/2}$, $SiR^2R^3O_{2/2}$ and $SiR^4R^5R^6O_{1/2}$ units is from 20 to 20,000 parts by weight per 100 parts by weight of the inorganic particles and a ratio $\sum D/\sum M$ is at least 3, where $\sum D$ is an integrated value of NMR signals assigned to all D units ($SiR^2R^3O_{2/2}$) on analysis by $^{29}Si$ nuclear magnetic resonance (NMR) spectroscopy, and $\sum M$ is an integrated value of NMR signals assigned to

all M units ($SiR^4R^5R^6O_{1/2}$), and obtainable by effecting ring-opening polymerization of cyclic siloxane of the formula (1):

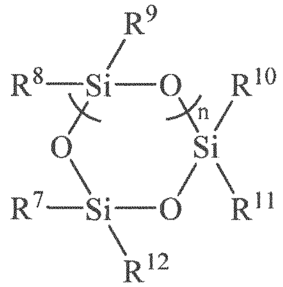

(1)

in a dispersion of the inorganic particles;

wherein in the above formulae $SiR^1O_{3/2}$, $SiR^2R^3O_{2/2}$ and $SiR^4R^5R^6O_{1/2}$ :

each $R^1$ independently is hydrogen or a group selected from $C_1$-$C_{20}$ alkyl group, $C_2$-$C_{20}$ alkenyl group, $C_6$-$C_{20}$ aryl group and (poly)dimethylsiloxy group of up to 50 silicon atoms, which group may be substituted with (meth)acrylic, oxiranyl, amino, mercapto, isocyanate or fluorine radical,
each $R^2$, $R^3$, $R^4$ and $R^5$ independently is hydrogen or a group selected from $C_1$-$C_{20}$ alkyl group, $C_2$-$C_{20}$ alkenyl group, $C_6$-$C_{20}$ aryl group and (poly)dimethylsiloxy group of up to 50 silicon atoms, which group may be substituted with(meth)acrylic, oxiranyl or fluorine radical, and
$R^6$ is hydrogen or a group selected from $C_1$-$C_{20}$ alkyl group, $C_2$-$C_{20}$ alkenyl group, $C_6$-$C_{20}$ aryl group, (poly)dimethylsiloxy group of up to 50 silicon atoms, $C_1$-$C_{10}$ alkoxy group and hydroxyl group, which group may be substituted with (meth)acrylic, oxiranyl or fluorine radical,

and wherein in the above formula (1):
$R^7$, $R^8$, $R^9$, $R^{10}$, $R^{11}$ and $R^{12}$ are each independently hydrogen or a group selected from $C_1$-$C_{20}$ alkyl group, $C_2$-$C_{20}$ alkenyl group, $C_6$-$C_{20}$ aryl group, and (poly)dimethylsiloxy group of up to 50 silicon atoms, which group may be substituted with (meth)acrylic, oxiranyl or fluorine radical, and n is an integer of 0 to 10.

In another aspect (claim 7) the invention provides a dispersion comprising the inorganic particle-polysiloxane composite defined above in a medium.
Preferably, the medium is at least one compound selected from the group consisting of pentane, hexane, heptane, nonane, decane, benzene, toluene, o-xylene, m-xylene, p-xylene, and a polysiloxane compound. In a more preferred embodiment, the polysiloxane compound is at least one compound selected from the group consisting of hexamethylcyclotrisiloxane, octamethylcyclotetrasiloxane, decamethylcyclopentasiloxane, and dodecamethylcyclohexasiloxane. Typically, the polysiloxane compound is polydimethylsiloxane having a kinematic viscosity of 50 to 100,000 $mm^2/s$ at 25°C.
In a further aspect (claim 11) the invention provides a solid material comprising the inorganic particle-polysiloxane composite defined above. The solid material may further comprise a binder which is a silicone resin or silicone rubber.
In a still further aspect (claim 13) the invention provides a method for preparing an inorganic particle-polysiloxane composite as defined above, comprising the steps of:

(a) providing a dispersion of the inorganic particles in a polar organic solvent, and
(b) mixing the dispersion with at least one cyclic siloxane having the general formula (1), and subjecting the cyclic siloxane in the mixture to ring-opening polymerization.

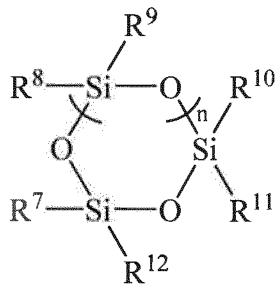

(1)

Herein $R^7$, $R^8$, $R^9$, $R^{10}$, $R^{11}$ and $R^{12}$ are as defined above.

Preferably step (a) includes surface treatment of inorganic particles having a volume basis 50% cumulative particle size of 1 to 200 nm with a silane compound and/or a (partial) hydrolytic condensate thereof and dispersing the particles in the polar organic solvent.

Preferably the polar organic solvent in step (a) is at least one solvent selected from the group consisting of methanol, ethanol, isopropyl alcohol, and n-propyl alcohol.

Preferably step (b) is performed in the presence of an acid or base catalyst.

Preferably the cyclic siloxane is at least one compound selected from the group consisting of hexamethylcyclotrisiloxane, octamethylcyclotetrasiloxane, decamethylcyclopentasiloxane, dodecamethylcyclohexasiloxane, and 2,4,6,8-tetramethylcyclotetrasiloxane.

Preferably step (b) includes ring-opening polymerization of the cyclic siloxane in the presence of a silane compound and/or a hydrolytic condensate thereof as a polymer chain extending component in an amount of up to 1 mole equivalent based on the cyclic siloxane, the silane compound having the general formula (2):

$R^{13}R^{14}Si(OR^{15})_2$ (2)

wherein $R^{13}$ and $R^{14}$ are each independently hydrogen or a group selected from the group consisting of a $C_1$-$C_{20}$ alkyl group, $C_2$-$C_{20}$ alkenyl group, $C_6$-$C_{20}$ aryl group, and (poly)dimethylsiloxy group of up to 50 silicon atoms, which may be substituted with a (meth)acrylic, oxiranyl or fluorine radical and $R^{15}$ is hydrogen or an alkyl group having up to 6 carbon atoms.

Preferably step (b) includes ring-opening polymerization of the cyclic siloxane in the presence of a silicon compound as a polymer chain terminating component in an amount of up to 100 parts by weight per 100 parts by weight of the cyclic siloxane, the silicon polymer chain terminating compound preferably having the general formula (3) or (4) :

$R^{16}R^{17}R^{18}Si (X)$ (3)

$R^{16}R^{17}R^{18}SiOSiR^{16}R^{17}R^{18}$ (4)

wherein $R^{16}$, $R^{17}$ and $R^{18}$ are each independently hydrogen or a group selected from the group consisting of a $C_1$-$C_{20}$ alkyl group, $C_2$-$C_{20}$ alkenyl group, $C_6$-$C_{20}$ aryl group, and (poly)dimethylsiloxy group of up to 50 silicon atoms, which may be substituted with a (meth)acrylic, oxiranyl or fluorine radical and X is a group selected from the group consisting of alkoxy, allyl, acetoxy, enol, and chlorine.

The method may further comprise the step (c) of removing the polar organic solvent after step (b).

The method may further comprise after step (b), a step (d) of adding a cyclic siloxane of formula (1), a polymer chain extending component of formula (2) and/or a polymer chain terminating component of formula (3) or (4) and conducting reaction again.

The composite material disclosed herein is a product obtainable by any of the methods disclosed herein, and may be a particulate material.

## ADVANTAGEOUS EFFECTS

We find that the inorganic particle-polysiloxane composites disclosed herein have characteristics whereby they can be dispersed in silicone oil and other media to form a transparent material.

## BRIEF DESCRIPTION OF DRAWING

FIG. 1 is a diagram showing $^1$H-NMR spectra of the polysiloxane-grafted inorganic oxides (inorganic oxide particle-polysiloxane composites) TP-1 and TP-6 in Examples 1 and 6.

FIG. 2 is a diagram showing UV-Vis transmission spectra of the silicone rubbers in Example 8 and Comparative Examples 4 and 5.

## FURTHER EXPLANATIONS; OPTIONS AND PREFERENCES

As used herein, the notation (Cn-Cm) means a group containing from n to m carbon atoms per group. Me stands for methyl. The abbreviation: NMR is nuclear magnetic resonance spectroscopy, GPC is gel permeation chromatography, DOP is degree of polymerization, and TGA is thermogravimetric analysis. The inorganic particle-polysiloxane composite is sometimes referred simply as "composite."

Now the inorganic particle-polysiloxane composite, the dispersion and solid material containing the composite, and the method of preparing the composite are described in detail.

## INORGANIC PARTICLE-POLYSILOXANE COMPOSITE

The inorganic particle-polysiloxane composite is defined as comprising inorganic particles and a polysiloxane containing $SiR^2R^3O_{2/2}$ and $SiR^4R^5R^6O_{1/2}$ units grafted at least in part to surfaces of the particles. The inorganic particles have a 50% cumulative particle size of 1 to 200 nm, based on volume basis particle size distribution as measured by the dynamic light scattering method, which is well known. The polysiloxane may be bonded to the inorganic particle surface via a siloxane layer containing $SiR^1O_{3/2}$ units. The total of siloxane constituents represented by $SiR^1O_{3/2}$, $SiR^2R^3O_{2/2}$, and $SiR^4R^5R^6O_{1/2}$ units is 20 to 20,000 parts by weight per 100 parts by weight of the inorganic particles.

Herein $R^1$ is independently hydrogen or a group selected from among a $C_1$-$C_{20}$ alkyl group, $C_2$-$C_{20}$ alkenyl group, $C_6$-$C_{20}$ aryl group, and (poly)dimethylsiloxy group of up to 50 silicon atoms, which may be substituted with a (meth)acrylic, oxiranyl, amino, mercapto, isocyanate or fluorine radical. $R^2$, $R^3$, $R^4$ and $R^5$ are each independently hydrogen or a group selected from among a $C_1$-$C_{20}$ alkyl group, $C_2$-$C_{20}$ alkenyl group, $C_6$-$C_{20}$ aryl group, and (poly)dimethylsiloxy group of up to 50 silicon atoms, which may be substituted with a (meth)acrylic, oxiranyl or fluorine radical. $R^6$ is hydrogen or a group selected from among a $C_1$-$C_{20}$ alkyl group, $C_2$-$C_{20}$ alkenyl group, $C_6$-$C_{20}$ aryl group, (poly)dimethylsiloxy group of up to 50 silicon atoms, $C_1$-$C_{10}$ alkoxy group, and hydroxyl group, which may be substituted with a (meth)acrylic, oxiranyl or fluorine radical.

The grafted polysiloxane desirably consists essentially of $SiR^2R^3O_{2/2}$ and $SiR^4R^5R^6O_{1/2}$ units, but may optionally contain $SiO_2$ and $R^2SiO_{3/2}$ units. A said siloxane coating layer desirably consists essentially of $SiR^1O_{3/2}$ units, but may optionally contain D units and/or Q units.

Herein Q units refer to units of $SiO_{4/2}$ structure, T units refer to units of $SiR^1O_{3/2}$ structure, D units refer to units of $SiR^2R^3O_{2/2}$ structure, and M units refer to units of $SiR^4R^5R^6O_{1/2}$ structure, unless otherwise stated. Also, M units may have at least one oxygen atom substituted on the silicon as long as they are polysiloxane terminal constituents in the graft moiety, unless otherwise stated. For example, $R^6$ may be alkoxy or hydroxyl.

### Polysiloxane component

Of the groups $R^1$, $R^2$, $R^3$, $R^4$, $R^5$ and $R^6$, the $C_1$-$C_{20}$ alkyl groups are preferably those of 1 to 6 carbon atoms, and include methyl, ethyl, propyl, and butyl. Inter alia, methyl is most preferred. The $C_2$-$C_{20}$ alkenyl groups are preferably those of 2 to 6 carbon atoms, more preferably vinyl and allyl. The $C_1$-$C_{10}$ alkoxy groups are preferably those of 1 to 6 carbon atoms, and include methoxy, ethoxy, propoxy, and butoxy. Inter alia, methoxy is most preferred. The $C_6$-$C_{20}$ aryl groups are preferably those of 6 to 10 carbon atoms, and phenyl, tolyl, and xylyl are more preferred. The (poly)dimethylsiloxy groups of up to 50 silicon atoms are preferably those of 1 to 50 silicon atoms, more preferably 1 to 30 silicon atoms.

When $R^1$, $R^2$, $R^3$, $R^4$, $R^5$ and $R^6$ are methyl, an inorganic particle composite having storage stability and heat resistance may be obtained. When some of $R^1$, $R^2$, $R^3$, $R^4$, $R^5$ and $R^6$ are phenyl, an inorganic particle composite having high affinity to phenyl silicone materials may be obtained. When at least one of $R^1$, $R^2$, $R^3$, $R^4$, $R^5$ and $R^6$ is hydrogen, vinyl or allyl, there may be obtained the advantage that when a mixture of the inorganic particle composite and a silicone composition is cured, a tough material in which the inorganic particles are crosslinked to the silicone composition may be obtained because the relevant group undergoes hydrosilylation reaction with hydrogensilicone or vinylsilicone in the silicone composition. When $R^6$ is hydroxyl or alkoxy, the silicone chain may be extended or terminally modified by reaction with various cyclic siloxanes or alkoxysilanes.

The total of T units in the inorganic particle-polysiloxane composite is preferably 0 to 100 parts by weight, more preferably 10 to 70 parts by weight, and even more preferably 10 to 50 parts by weight per 100 parts by weight of the organic particles. If the total of T units exceeds 100 parts by weight, many T units are bonded to the particle surface to

cap hydroxyl groups on the particle surface, which can prevent the graft moiety from efficiently bonding to the inorganic particles.

The total of D units in the inorganic particle-polysiloxane composite is preferably 10 to 10,000 parts by weight, more preferably 50 to 1,000 parts by weight, and even more preferably 100 to 500 parts by weight per 100 parts by weight of the organic particles. If the total of D units is less than 10 parts by weight, the polysiloxane coverage may be too low to avoid direct contact between inorganic particles, leading to poor dispersibility in non-polar solvents. If the total of D units exceeds 10,000 parts by weight, the weight proportion of the inorganic particles in the inorganic particle-polysiloxane composite is relatively low, with a possibility that the inorganic particles fail to exert their functionality.

Preferably, the inorganic particle-polysiloxane composite satisfies the relation: 0 < (number of M units) < (number of D units). If the number of M units is more than or equal to the number of D units, which means the presence of more polymer chain terminating component, the grafted polysiloxane may have too low a molecular weight to avoid direct contact between inorganic particles, leading to poor dispersibility in non-polar solvents. A ratio of the number of M units to the number of D units is preferably up to 0.5/1, more preferably up to 0.2/1. The lower limit is preferably at least 0.001/1.

The inorganic particle-polysiloxane composite should contain the polysiloxane component in an amount of 20 to 20,000 parts by weight, preferably 50 to 10,000 parts by weight per 100 parts by weight of the inorganic particles. Less than 20 parts by weight of the polysiloxane component may fail to avoid direct contact between inorganic particles, leading to poor dispersibility in non-polar solvents. More than 20,000 parts by weight of the polysiloxane component means that the relative proportion of the inorganic particles in the composite is low, with a possibility that the inorganic particles fail to exert their functionality.

The amount of polysiloxane introduced may be computed by determining the weight of the residue after thermogravimetric analysis (TGA) as the weight of the inorganic particles and the weight loss as the weight of the polysiloxane component. For such TGA, an instrument such as Thermo Plus by Rigaku Corporation may be used. The analysis is preferably carried out in an inert atmosphere for preventing reaction with oxygen.

The graft moiety designates the polysiloxane component grafted to the surface of inorganic particles by surface treatment thereof. While silica particles contain $SiO_2$ units (Q units) or core/shell type particles contain Q unit silicon in the shell, these siloxane constituents in particles themselves are not encompassed in the graft moiety. On the other hand, where inorganic particles are surface treated with a polysiloxane capped with a trimethoxysiloxy group at one end, i.e. having a reactive Q unit at one end (e.g. X-24-9822 by Shin-Etsu Chemical Co., Ltd.), the Q unit from X-24-9822 bonded to the particle surface is encompassed in the graft moiety.

That is, the graft moiety refers to a linear polysiloxane moiety bonded to reactive groups such as OH and methoxy groups on the surface of the particles.

Inorganic particles

The particle size of inorganic particles may be measured by a variety of methods. The range of particle size is described herein as a volume basis 50% cumulative distribution diameter ($D_{50}$) as measured by the dynamic light scattering method using laser light while the particle diameter may be observed by electron microscopy as supporting evidence. Although the value determined by such a measurement method does not depend on a particular measuring instrument, such an instrument as Nanotrac UPA-EX150 (Nikkiso Co., Ltd.) may be used for the dynamic light scattering method. For the electron microscopy, a transmission electron microscope H-9500 (Hitachi High-Technologies Corp.) may be used. When inorganic particles are added to a transparent silicone material, for example, the size $D_{50}$ of the inorganic particles should be in a range of 1 to 200 nm, more preferably 1 to 100 nm, even more preferably 1 to 80 nm, and most preferably 1 to 50 nm, because transparency in the visible region is crucial. Particles with a size $D_{50}$ in excess of 200 nm, which is greater than the wavelength of the visible region, may cause noticeable scattering. Particles with a size $D_{50}$ of less than 1 nm may give an extremely large total surface area in the dispersing medium so that they are likely to agglomerate, and a dispersion thereof may be difficult to handle.

A core of the inorganic particles may be one or a complex of two or more selected from the specified metal oxides. Herein, the term "complex" is used in a broad sense and refers to a complex (double or multiple) oxide formed through simple mixing or chemical bonding. The complex oxide formed through chemical bonding refers to the form represented by the following formula (5).

$$(M^1O_x)_d(M^2O_y)_e \qquad (5)$$

Herein $M^1$ is an element selected from among Al, B, In, Si, Ge, Sn, Ti, Mn, Zn, Y, Zr, Hf, Ta, La, Ce, Pr, Nd, Tb, Dy, and Yb. $M^2$ is an element selected from among Al, B, In, Si, Ge, Sn, Ti, Mn, Zn, Y, Zr, Hf, Ta, La, Ce, Pr, Nd, Tb, Dy, and Yb, provided that the element of $M^2$ is not identical with the element of $M^1$ and provided that in this invention, the inorganic particles are of core/shell structure having a core containing at least one compound selected from among aluminum oxide, cerium oxide, titanium oxide, zinc oxide, indium tin oxide, zirconium oxide, tin oxide, and iron oxide and a shell

of silicon oxide around the core. Letters x and y are given as x = a/2 wherein a is the valence number of $M^1$, and y = b/2 wherein b is the valence number of $M^2$. Letters d and e are real numbers meeting d+e = 1, 0 < d < 1 and 0 < e < 1. That is, the structure has a unit in which $M^1$ bonds with $M^2$ via oxygen. In the structure, $M^1$ and $M^2$ may be sparsely distributed or locally concentrated. The structure wherein $M^1$ and $M^2$ are sparsely distributed is observed in a co-hydrolyzate of two or more metal alkoxides. The structure wherein $M^1$ and $M^2$ are locally concentrated is observed in core/shell type particles (i.e. particles each consisting of a core of microparticulate metal oxide and a shell of another metal oxide enclosing the core) and is formed, for example, by hydrolyzing a plurality of metal alkoxides in stages corresponding to the type of metal alkoxide.

The inorganic particles are of core/shell structure having a core of one or a complex of two or more selected from the foregoing metal oxides and a shell of silicon oxide around the core. Typical of the core/shell type particles are core/shell type particles having a core of a complex oxide of titanium oxide-tin oxide (particulate titanium oxide having tin incorporated in solid solution) and a shell of silicon oxide around the core. Such core/shell type particles are prepared, for example, by the method described in JP 5704133.

Chain length of grafted polysiloxane

The chain length of the grafted polysiloxane can usefully be described and is preferably compared in terms of a ratio ∑D/∑M of an integrated value (∑D) of $^{29}$Si-NMR signals assigned to all D units to an integrated value (∑M) of $^{29}$Si-NMR signals assigned to all M units. D units are backbone constituents of the polysiloxane and M units are terminal constituents of the polysiloxane. It is presumed that a small value of ∑D/∑M indicates that the chain length of grafted polysiloxane is short whereas a large value of ∑D/∑M indicates that the chain length of grafted polysiloxane is long. The polysiloxane has a ∑D/∑M value of at least 3, more preferably at least 5. A ∑D/∑M value of less than 3 is undesirable because the excluded volume of the grafted polysiloxane may be too small to avoid direct contact between particles, leading to agglomeration. The upper limit of ∑D/∑M is generally up to 1,000, preferably up to 500, though not critical.

Prior to measurement of a sample by $^{29}$Si-NMR spectroscopy, volatiles such as unreacted siloxanes and low molecular siloxanes are preferably distilled off from the sample. For many solid compounds, a phenomenon is known that when a solid compound is surface treated with linear polysiloxanes or alkyl chains having weak intermolecular interaction, the compound liquefies as a result of the interaction between compound molecules being reduced. Similarly, the inorganic particles used herein may liquefy as a result of grafting of polysiloxane. Ring-opening polymerization of cyclic siloxane often proceeds as an equilibration reaction. When the inorganic particle-polysiloxane composite is obtained in liquid form, the liquid sample may contain some ungrafted polysiloxane component. However, as long as the equilibration reaction is used, we find there is little or no chance of deviation of the ∑D/∑M value independent of whether or not a polysiloxane component which is not grafted to the particle surface is present. Accordingly, the ∑D/∑M value can be used for evaluation as an intrinsic value to the inorganic particle-polysiloxane composite.

As used herein, the "integrated value" refers to a quadrature problem associated with plotting of signal intensity relative to parts per million (ppm). For the quadrature, a threshold value is preferably set by an S/N ratio at a specific standard. The S/N ratio is at least 5, preferably at least 10, and more preferably at least 20. A S/N ratio of less than 5 may be unfavorable because the base line becomes thick and the accuracy of integration is worsened. The integrated value may be determined by the Simpson method using a computer, or by cutting a printed medium having a uniform plane density representative of spectrum to the spectral profile, and measuring its weight.

The $^{29}$Si-NMR spectroscopy may be applied to either solid or liquid. In the case of solid NMR spectroscopy, since a measurement sample must be evaporated to dryness as pre-treatment, the results do not necessarily reflect the bond states of silicon in the sample. Accordingly it is preferred to monitor by the NMR spectroscopy in liquid state. At this point, since $^{29}$Si nucleus has a negative gyromagnetic ratio ($\gamma_B$), the nuclear Overhauser effect (NOE) becomes inversed, suppressing the nuclear magnetic relaxation prevailing around resonance nucleus. Therefore, measurement conditions are preferably selected such that the negative NOE may not become significant. In the case of pulse Fourier-transform NMR, this problem can be solved using an adequate pulse sequence. For example, an off-resonance pulse sequence is preferably used. In the liquid $^{29}$Si-NMR spectroscopy, analysis is preferably made using a test tube and probe both made of silicon-free material. Exemplary of the silicon-free material which can be used in the NMR spectroscopy is polytetrafluoroethylene, typically Teflon®. In the liquid $^{29}$Si-NMR spectroscopy, an appropriate relaxation agent may be used for reducing the measurement time. As the relaxation agent, well-known reagents may be used (see, for example, Organometallics, Volume 27, Issue 4, pp500-502 (2008), and the references therein). In particular, preference is given to chromium(III) acetylacetonate since it is fully soluble in organic solvents and does not cause agglomeration of titanium oxide. For example, when several droplets of a solution of chromium(III) acetylacetonate in deuterated chloroform (chloroform-$d_3$) in a concentration of about 1 mol/$dm^3$ are used as the relaxation agent, desirably both the relaxation effect and deuterium lock effect are available.

The notation of resonance magnetic field may be given by expressing in parts per million (ppm) a difference from the resonance magnetic field based on the resonance of $^{29}$Si nucleus of tetramethylsilane. According to this notation

rule, most often D unit is detectable in the range of -10 to -30 ppm, preferably -15 to -25 ppm, M unit in the range of -5 to 15 ppm, preferably 0 to 10 ppm, and M unit having one alkoxy substituted in the range of -5 to -20 ppm, preferably -10 to -15 ppm. The negative value in the notation indicates that the resonance magnetic field has a difference on a higher magnetic field side than the reference line. The width of the reference line depends on the strength of the magnetic field of the NMR instrument used in measurement. The aforementioned preferred range of resonance line is the value obtained from an example where a magnetic field of 11.75 Tesla (T) is applied. The magnetic field which can be used in the NMR instrument is in a range of 5 T to 20 T, preferably 8 T to 15 T, and more preferably 10 T to 13 T. If the magnetic field is less than 5 T, measurement may be difficult because the S/N ratio becomes lower. If the magnetic field exceeds 20 T, measurement may be difficult because the resonance instrument becomes large sized. As a matter of course, the skilled artisan will analogize the strength of magnetic field, the width of resonance line, and the intensity of signals from the information set forth above.

The inorganic particle-polysiloxane composite preferably has the graft moiety attached to the core moiety via a siloxane bond. Attaching the graft moiety to the inorganic particle core moiety via a covalent bond is effective for endowing the composite with high environmental stability and dispersion stability. The siloxane bond between the core moiety and the graft moiety can be confirmed by $^{29}$Si-NMR spectroscopy.

The presence of a siloxane bond between the core moiety and the graft moiety can practically be confirmed as a change of NMR signal assigned to D unit in measurement of $^{29}$Si-NMR spectroscopy. For example, NMR signals assigned to D' unit in which D unit is bonded to T unit of a polysiloxane and D" unit in which D unit is bonded to hydroxyl on the inorganic particle surface can be used for confirmation. NMR signal assigned to D' unit in which D unit is bonded to T unit of a polysiloxane is often detectable in the range of about -10 to about -25 ppm, preferably about -15 to about -20 ppm. The range of NMR signal assigned to D" unit in which D unit is bonded to hydroxyl on the inorganic particle surface varies with the type of inorganic particles bonded. In the case of silicon oxide, for example, the NMR signal assigned to D" unit bonded to the silicon oxide surface is often detectable in the range of about -10 to about -25 ppm, preferably about -15 to about -20 ppm.

The polysiloxane-grafted inorganic oxide is preferably in liquid form or solid form, more preferably in liquid form. Examples of the solid form include gel and powder. Examples of the liquid form include Newtonian fluid and Bingham fluid, preferably non-thixotropic Newtonian fluid.

DISPERSION CONTAINING INORGANIC PARTICLE-POLYSILOXANE COMPOSITE

The dispersion containing the inorganic particle-polysiloxane composite exhibits various functionalities depending on the type of dispersoid and offers oils and coating compositions having functionalities. For example, when added to a coating composition, the dispersion has various functionalities such as mechanical functionalities capable of imparting mar resistance and flexibility, optical functionalities capable of imparting light refraction control, UV screening, radiation shielding, and fluorescence, and electrical functionalities capable of imparting electroconductivity and permittivity to the coating composition. The dispersion containing the inorganic particle-polysiloxane composite may be composed of various types of elements and thus exert a variety of functionalities. From a chemical engineering standpoint, however, dispersion states are analogous. When solvent replacement of the dispersion is intended, one or a complex of two or more of the foregoing inorganic particles such as metal oxides can be handled as one group. The states from a chemical engineering standpoint refer to physical properties discussed in the category of powder engineering or transport phenomena, for example, particle size and zeta-potential of dispersoid. Even when the dispersions of the inorganic particle-polysiloxane composites contain a dispersoid composed of different type of elements, they are acknowledgeable as a comparable parallel group in a discussion using these physical quantities. Although only dispersions containing specific types and/or combinations of the inorganic particle-polysiloxane composites are described in the specification, undescribed dispersions are believed to be equivalent and fall within the scope of the invention.

As used herein, the term "dispersion" generally refers to a stable dispersion state (i.e. colloidal dispersion) from which particles do not settle down over time, unless otherwise stated. Sometimes, the stable dispersion state may be achieved when the Brownian motion speed of particles is faster than the gravitational sedimentation velocity. Since particles in a viscous liquid such as silicone have a slow sedimentation velocity, it takes a long time to judge whether or not particles have agglomerated and precipitated. In such a case, a centrifuge is preferably used to apply centrifugal force to promote particle precipitation, because it becomes more efficient to judge the presence or absence of precipitated particles.

Dispersoid

The dispersoid in the dispersion is the inorganic particle-polysiloxane composite defined herein.

It is common that when the dispersion is added to a coating composition, for example, typically one or more types of inorganic particles are used depending on a particular purpose. It is thus not excluded that the dispersion

contains inorganic particles of plural types. The dispersion may be added to a coating composition in order to impart mechanical properties, UV-screening properties, and electroconductivity. For imparting mechanical properties, aluminum oxide, tin oxide and complex oxide containing at least one such metal element are often used. For imparting UV-screening properties, titanium oxide, zinc oxide, and cerium oxide are often used, and may optionally be combined with silicon oxide, aluminum oxide and tin oxide (for imparting mechanical properties) as a complex or mixture. For imparting electroconductivity, an indium oxide-tin oxide complex is often used. Although these inorganic particles can impart a variety of functionalities, the chemical engineering state of dispersion is analogous. When solvent replacement of the inorganic particle dispersion is intended, one or a complex of two or more of the foregoing inorganic particles can be handled as one group.

Dispersing medium

Various liquids may be used as the dispersing medium in the dispersion. Examples include liquids containing one or a mixture of two or more selected from the following: $C_5$-$C_{30}$ hydrocarbon compounds such as pentane, hexane, heptane, nonane, decane, undecane, dodecane, tridecane, tetradecane, pentadecane, hexadecane, heptadecane, octadecane, nonadecane, icosane, eicosane, docosane, tricosane, tetracosane, pentacosane, hexacosane, heptacosane, octacosane, nonacosane, triacontane, benzene, toluene, o-xylene, m-xylene, p-xylene, petroleum ether (or a mixture of the foregoing), kerosene, ligroin, and Nujol; mono- and polyhydric alcohols such as methanol, ethanol, 1-propanol 2-propanol, cyclopentanol, ethylene glycol, propylene glycol, β-thiodiglycol, butylene glycol, and glycerol; ethers such as diethyl ether, dipropyl ether, cyclopentyl methyl ether, ethylene glycol dimethyl ether, diethylene glycol dimethyl ether, triethylene glycol dimethyl ether, ethylene glycol monomethyl ether, ethylene glycol monoethyl ether, ethylene glycol monopropyl ether, ethylene glycol monobutyl ether, propylene glycol monomethyl ether, propylene glycol monoethyl ether, propylene glycol monopropyl ether, propylene glycol monobutyl ether, butylene glycol monomethyl ether, butylene glycol monoethyl ether, butylene glycol monopropyl ether, and butylene glycol monobutyl ether; esters such as methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutyrate, propylene glycol diacetate, propylene glycol dipropionate, propylene glycol dibutyrate, ethylene glycol methyl ether acetate, propylene glycol methyl ether acetate, butylene glycol monomethyl ether acetate, ethylene glycol ethyl ether acetate, propylene glycol ethyl ether acetate, and butylene glycol monoethyl ether acetate; ketones such as acetone, diacetone alcohol, diethyl ketone, methyl ethyl ketone, methyl isobutyl ketone, methyl n-butyl ketone, dibutyl ketone, cyclopentanone, cyclohexanone, cycloheptanone, and cyclooctanone; amides such as dimethylformamide, dimethylacetamide, tetraacetylethylenediamide, tetraacetylhexamethylenetetramide, and N,N-dimethylhexamethylenediamine diacetate; and siloxanes such as hexamethyldisiloxane, octamethyltrisiloxane, decamethyltetrasiloxane, hexamethylcyclotrisiloxane, octamethylcyclotetrasiloxane, decamethylcyclopentasiloxane, dodecamethylcyclohexasiloxane, hexaphenylcyclotrisiloxane, octaphenylcyclotetrasiloxane, 2,4,6,8-tetramethylcyclotetrasiloxane, 1,3,5-tris(3,3,3-trifluoropropyl)-1,3,5-trimethylcyclotrisiloxane, 2,4,6,8-tetramethyl-2,4,6,8-tetravinylcyclotetrasiloxane, trimethylsiloxy-endcapped methylhydrogenpolysiloxane (trade name KF-99, KF-9901 by Shin-Etsu Chemical Co., Ltd.), trimethylsiloxy-endcapped dimethylsiloxane (trade name KF-96-100CS, KF-96-10000CS by Shin-Etsu Chemical Co., Ltd.), trimethylsiloxy-endcapped methylphenylsiloxane, trimethylsiloxy-endcapped diphenylsiloxane, dimethylvinylsiloxy-endcapped dimethylsiloxane, and dimethylhydrogensiloxy-endcapped dimethylsiloxane, which may be used alone or in admixture. It is noted that the term "endcapped" means that a siloxane is capped at both ends of the molecular chain with the referenced groups, unless otherwise stated.

The dispersing medium is preferably at least one compound selected from among pentane, hexane, heptane, nonane, decane, benzene, toluene, o-xylene, m-xylene, p-xylene, and polysiloxane compounds. The preferred polysiloxane compound is at least one selected from among hexamethylcyclotrisiloxane, octamethylcyclotetrasiloxane, decamethylcyclopentasiloxane, and dodecamethylcyclohexasiloxane. The polysiloxane compound is preferably a polydimethylsiloxane having a kinematic viscosity of 50 to 100,000 $mm^2/s$ at 25°C. Unless otherwise stated, the viscosity of the dispersing medium is measured at 25°C according to JIS Z8803, and the kinematic viscosity of polydimethylsiloxane is measured by an Ostwald viscometer.

Dispersion

The dispersion contains the inorganic particle-polysiloxane composite, i.e. dispersoid in an amount of 0.001% to 50% by weight, more preferably 0.01% to 30% by weight. Less than 0.001% by weight of the composite may not be an effective concentration. A dispersion containing more than 50% by weight of the composite may have poor storage stability.

The inorganic particle-polysiloxane composite is highly compatible with coating compositions, typically silicone coating compositions. When the composite is introduced to organic coating compositions, it imparts various functionalities to the coating compositions depending on the type of inorganic particles. Examples of the functionality include mechanical functionality capable of imparting mar resistance and flexibility, optical functionality capable of imparting light refraction control, UV screening, radiation shielding, and fluorescence, and electrical functionality capable of imparting electroconductivity and permittivity.

SOLID MATERIAL

Unless otherwise stated, the term "solid material" refers to a material which is stable and has a defined or certain shape and volume at standard ambient temperature and pressure, and is not distinguished in terms of form such as glass, rubber, crystal or amorphous form.

The inorganic particle-polysiloxane composite may be mixed with a variety of organic resin bases to form resin materials having inorganic particles uniformly dispersed therein. Examples of the organic resin include polycarbonate, polystyrene, acrylic resins, modified acrylic resins, urethane resins, thiourethane resins, polycondensates of halogenated bisphenol A and ethylene glycol, acrylic urethane resins, halogenated aryl-containing acrylic resins, sulfur-containing resins, silicone rubbers, and silicone resins. Additionally, the inorganic particle-polysiloxane composite is able to impart various functionalities to the resin depending on the type of inorganic particles. Examples of the functionality include mechanical functionality capable of improving hardness, tensile strength, and heat resistance, optical functionality capable of imparting light refraction control, UV screening, radiation shielding, and fluorescence, and electrical functionality capable of imparting electroconductivity and permittivity.

The inorganic particle-polysiloxane composite may be mixed with various organic resin bases by any desired processes, for example, a process of mixing the composite prior to the polymerization or curing step of the resin or a process of directly kneading the composite with the resin. The process of mixing the composite prior to the polymerization or curing step of the resin is preferred in order to thoroughly disperse the inorganic particles in the resin.

SILICONE RUBBER MATERIAL

Unless otherwise stated, the term "silicone rubber material" refers to a material which exhibits rubber elasticity, is stable and has a certain shape and volume at standard ambient temperature and pressure, preferably a material having a glass transition temperature in a range lower than 25°C.

The silicone rubber material contains the inorganic particle-polysiloxane composite, preferably in a concentration of 0.001 to 20% by weight, more preferably 0.01 to 20% by weight. If the content of the composite is less than 0.001 wt%, the composite (inorganic particles) may fail to exert its function. More than 20 wt% of the composite may detract from the properties of silicone rubber.

The silicone rubber material containing the inorganic particle-polysiloxane composite is characterized by high visible light transmission. One index of visible light transmission is a light transmittance of the rubber material in the visible light region. Since the visible light transmittance of a film decreases as the film thickness increases, a rubber material sample with a thickness of 1 mm is used as standard. Preference is given to a sample of a composite-loaded silicone material having a light transmittance at wavelength 500 nm which is less than than 10% below, more preferably less than 5% below, the light transmittance of the same silicone material without the composite. Notably, the light transmittance of a rubber material may be measured by a UV/Vis absorption spectrometer.

Another index of visible light transmission is a haze (Hz). Since the haze of a film increases as the film thickness increases, a rubber material sample with a thickness of 1 mm is used as standard. Preference is given to a sample of a composite-loaded silicone material having a haze which does not undergo an increase of at least 20%, more preferably at least 10% from the haze of a composite-free silicone material. Notably, the haze of a rubber material may be measured by a turbidimeter.

The silicone rubber material used herein may be based on any well-known organopolysiloxane. Typically the organopolysiloxane has the average compositional formula (6):

$$R^{51}_{f}SiO_{(4-f)/2} \qquad (6)$$

wherein $R^{51}$ is each independently a substituted or unsubstituted, monovalent hydrocarbon group and f is a positive number of 1.98 to 2.02.

In formula (6), $R^{51}$ is each independently a substituted or unsubstituted, monovalent hydrocarbon group, preferably of 1 to 10 carbon atoms, more preferably 1 to 8 carbon atoms. Suitable substituted or unsubstituted monovalent hydrocarbon groups include alkyl groups such as methyl, ethyl, isopropyl, butyl, isobutyl, tert-butyl, hexyl and octyl; cycloalkyl groups such as cyclohexyl; alkenyl groups such as vinyl and allyl; aryl groups such as phenyl and tolyl; aralkyl

groups such as benzyl, phenylethyl and phenylpropyl; and substituted forms of the foregoing in which some or all hydrogen atoms are substituted by halogen atoms, cyano radicals or the like, for example, halo- and cyano-substituted alkyl groups such as chloromethyl, bromoethyl and cyanoethyl. Inter alia, methyl, vinyl, phenyl, and trifluoropropyl are preferred. More preferably methyl accounts for at least 50 mol%, especially at least 80 mol% of $R^{51}$ groups. The subscript f is a positive number of 1.98 to 2.02. Preferred are those organopolysiloxanes containing at least two alkenyl groups per molecule, especially 0.001 to 5 mol% of $R^{51}$ groups being alkenyl.

Although the molecular structure of the organopolysiloxane having formula (9) is not particularly limited, preference is given to an organopolysiloxane capped at a molecular chain end with a triorganosilyl group, especially diorganovinylsilyl group (e.g. dimethylvinylsilyl). Basically, the organopolysiloxane preferably has a linear structure although a mixture of different molecular structures is acceptable.

The organopolysiloxane preferably has an average degree of polymerization (DOP) of 100 to 100,000, more preferably 100 to 2,000. Also the organopolysiloxane preferably has a viscosity at 25°C of 100 to 100,000,000 $mm^2/s$, more preferably 100 to 100,000 $mm^2/s$. It is noted that average DOP is a value based on a weight average molecular weight measured by GPC versus polystyrene standards; and the viscosity is measured at 25°C according to JIS Z8803.

In one embodiment, the silicone rubber material is of organic peroxide cure type. In this embodiment, an organic peroxide is used as the curing agent. The organic peroxide cure is effective when the organopolysiloxane as the base is a gum-like one having a DOP of at least 3,000. Any of well-known organic peroxides may be used, for example, benzoyl peroxide, 2,4-dichlorobenzoyl peroxide, p-methylbenzoyl peroxide, o-methylbenzoyl peroxide, 2,4-dicumyl peroxide, 2,5-dimethyl-2,5-bis(t-butylperoxy)hexane, di-t-butyl peroxide, t-butyl perbenzoate, 1,1-bis(t-butylperoxy)-3,3,5-trimethylcyclohexane, and 1,6-bis(t-butylperoxycarboxy)hexane. The organic peroxide is preferably added in an amount of 0.01 to 10 parts by weight per 100 parts by weight of the organopolysiloxane. Besides, any well-known additives may be compounded in the silicone rubber material.

In another embodiment, the silicone rubber material is of addition reaction cure type. This embodiment uses an organopolysiloxane containing at least two alkenyl groups (typically vinyl) per molecule as the aforementioned organopolysiloxane, an organohydrogenpolysiloxane as a crosslinker, and an addition reaction catalyst as a curing agent.

The organohydrogenpolysiloxane is preferably one which is liquid at normal temperature and has the average compositional formula (7).

$$R^{52}_gH_hSiO_{(4-g-h)/2} \qquad (7)$$

Herein $R^{52}$ is each independently a $C_1$-$C_{10}$ substituted or unsubstituted, monovalent hydrocarbon group, g is a number meeting the range: $0 \le g \le 3$, preferably $0.7 \le g \le 2.1$; h is a number meeting the range: $0 < h \le 3$, preferably $0.001 \le h \le 1$; and $0 < g+h \le 3$, preferably $0.8 < g+h \le 3.0$.

In formula (7), $R^{52}$ is a $C_1$-$C_{10}$, preferably $C_1$-$C_8$ substituted or unsubstituted, monovalent hydrocarbon group, as exemplified above for $R^{51}$, typically free of aliphatic unsaturation. Exemplary groups include alkyl, aryl, aralkyl, and substituted alkyl groups such as methyl, ethyl, propyl, phenyl and 3,3,3-trifluoropropyl.

The molecular structure of organohydrogenpolysiloxane may be linear, cyclic, branched or three-dimensional network while the SiH group may be located at an end or an intermediate position of the molecular chain or both. Although the molecular weight is not particularly limited, the organohydrogenpolysiloxane preferably has a viscosity at 25°C of 1 to 1,000 $mm^2/s$, especially 3 to 500 $mm^2/s$.

Examples of the organohydrogenpolysiloxane include 1,1,3,3-tetramethyldisiloxane, methylhydrogencyclopolysiloxane, methylhydrogensiloxane/dimethylsiloxane cyclic copolymers, trimethylsiloxy-endcapped methylhydrogenpolysiloxane, trimethylsiloxy-endcapped dimethylsiloxane/methylhydrogensiloxane copolymers, dimethylhydrogensiloxy-endcapped dimethylpolysiloxane, dimethylhydrogensiloxy-endcapped dimethylsiloxane/methylhydrogensiloxane copolymers, trimethylsiloxy-endcapped methylhydrogensiloxane/diphenylsiloxane copolymers, trimethylsiloxy-endcapped methylhydrogensiloxane/diphenylsiloxane/dimethylsiloxane copolymers, copolymers consisting of $(CH_3)_2HSiO_{1/2}$ units and $SiO_{4/2}$ units, copolymers consisting of $(CH_3)_2HSiO_{1/2}$ units, $(CH_3)_3SiO_{1/2}$ units and $SiO_{4/2}$ units, and copolymers consisting of $(CH_3)_2HSiO_{1/2}$ units, $SiO_{4/2}$ units and $(C_6H_5)_3SiO_{1/2}$ units. It is noted that the term "endcapped" means that a siloxane is capped at both ends of the molecular chain with the referenced groups.

The organohydrogenpolysiloxane is preferably used in such an amount that 0.1 to 10, more preferably 0.2 to 2 silicon-bonded hydrogen atoms (SiH groups) may be available per silicon-bonded alkenyl group in the base polymer.

The addition reaction catalyst is selected from platinum group metal catalysts which include platinum group metals alone and compounds and complexes thereof. Exemplary platinum group metal catalysts include platinum catalysts such as platinum black, platinum chloride, chloroplatinic acid, reaction products of chloroplatinic acid and monohydric alcohols, complexes of chloroplatinic acid and olefins, and platinum bisacetoacetate, palladium catalysts such as tetrakis(triphenylphosphine)palladium and dichlorobis(triphenylphosphine)palladium, and rhodium catalysts such as chlorotris(triphenylphosphine)rhodium and tetrakis(triphenylphosphine)rhodium.

The addition reaction catalyst may be used in a catalytic amount, which is typically 0.1 ppm to 1,000 ppm, more

preferably 1 to 200 ppm of platinum group metal based on the weight of the alkenyl-containing organopolysiloxane. Less than 0.1 ppm may be insufficient to promote addition reaction or cure whereas more than 1,000 ppm may be uneconomical.

Of the foregoing types, the silicone rubber composition of addition reaction cure type is preferred because it often cures into a low hardness product.

In the silicone rubber material, various other components may be added if necessary and as long as the objects of the invention are not impaired. Suitable additional components are shown below while each component may be a single species or a mixture of plural species.

For instance, an addition reaction inhibitor may be blended in the silicone rubber material in order to provide a pot life. The addition reaction inhibitor is not particularly limited as long as it exerts a cure inhibitory effect to the hydrosilylation catalyst. The addition reaction inhibitor may be selected from conventional well-known compounds, for example, phosphorus-containing compounds such as triphenylphosphine, nitrogen-containing compounds such as tributylamine, tetramethylethylenediamine, and benzotriazole, sulfur-containing compounds, acetylene compounds such as acetylene alcohols (e.g. 1-ethynylcyclohexanol, 3,5-dimethyl-1-hexyn-3-ol), compounds containing at least two alkenyl groups, hydroperoxy compounds, and maleic acid derivatives.

The degree of the cure inhibitory effect of the addition reaction inhibitor varies with the chemical structure of the inhibitor. Therefore, whenever a particular addition reaction inhibitor is selected, preferably its amount is individually adjusted optimum. When an optimum amount of the addition reaction inhibitor is added, the silicone rubber composition remains stable during long-term shelf storage at room temperature and is still effectively heat curable.

Any of well-known antioxidants such as 2,6-di-t-butyl-4-methylphenyl may be added to the silicone rubber composition in order to prevent the composition from coloration, clouding and oxidative degradation. A photostabilizer such as hindered amine stabilizers may be added to the silicone rubber composition in order to impart resistance to photo-degradation. An inorganic filler such as fumed silica may be added to the silicone rubber composition in order to improve strength as long as the transparency of a cured product of the composition is not adversely affected. If desired, dyes, pigments and flame retardants may be added to the silicone rubber composition.

METHOD FOR PREPARING INORGANIC PARTICLE-POLYSILOXANE COMPOSITE

Although the method for preparing the inorganic particle-polysiloxane composite defined herein is not particularly limited, the method described below is preferable. A further aspect of the invention is a method for preparing the inorganic particle-polysiloxane composite, comprising the steps of:

(a) providing a dispersion of inorganic particles in a polar organic solvent, the inorganic particles being as defined above and having a volume basis 50% cumulative particle size of 1 to 200 nm as measured by the dynamic light scattering method, and

(b) mixing the dispersion with at least one cyclic siloxane having the general formula (1), and subjecting the cyclic siloxane in the mixture to ring-opening polymerization.

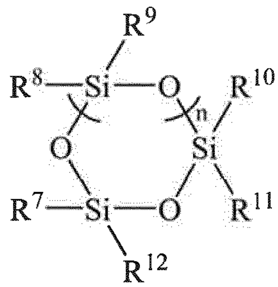

(1)

Herein $R^7$, $R^8$, $R^9$, $R^{10}$, $R^{11}$ and $R^{12}$ are each independently hydrogen or a group selected from the group consisting of a $C_1$-$C_{20}$ alkyl group, $C_2$-$C_{20}$ alkenyl group, $C_6$-$C_{20}$ aryl group, and (poly)dimethylsiloxy group of up to 50 silicon atoms, which may be substituted with a (meth)acrylic, oxiranyl or fluorine radical and n is an integer of 0 to 10.

Step (a)

Step (a) is to provide a dispersion of inorganic particles in a polar organic solvent, the inorganic particles having a volume basis 50% cumulative particle size of 1 to 200 nm as measured by the dynamic light scattering method.

As alluded to previously, the term "dispersion" refers to a stable dispersion state (i.e. colloidal dispersion) from which particles do not settle down over time, unless otherwise stated. The stable dispersion state may be achieved when

the Brownian motion speed of particles is faster than the gravitational sedimentation velocity. Since particles in a viscous liquid such as silicone have a slow sedimentation velocity, it is difficult to judge whether or not the dispersion state is stable. In such a case, a centrifuge may be used to apply centrifugal force to promote particle precipitation, because it becomes quick to judge the presence or absence of precipitated particles.

The inorganic particles to be provided in step (a) are as defined above. The starting inorganic particles may be either synthesized products or commercially available products. Examples of commercially available products include IPA dispersion of alumina nanoparticles (Sigma-Aldrich), butyl acetate dispersion of zinc oxide (Sigma-Aldrich), IPA dispersion of indium tin oxide (Sigma-Aldrich), and ITRANB15WT%-G180 (alcohol dispersion of indium tin oxide, CIK NanoTech). Also included are Tainok M-6 (titania water dispersion, Taki Chemical Co., Ltd.), Needral P10 (ceria water dispersion, Taki Chemical Co., Ltd.), Nanouse CE-T20B (ceria water dispersion, Nissan Chemical Industries, Ltd.), AS-100 (alumina water dispersion, Nissan Chemical Industries, Ltd.), Bayral AlML15 (alumina water dispersion, Taki Chemical Co., Ltd.), ALW10WT%-G0 (alumina water dispersion, CIK NanoTech), CEW10WT%-G120 (ceria water dispersion, CIK NanoTech), Cemeral S8 (tin oxide water dispersion, Taki Chemical Co., Ltd.), Bayral Fe-C10 (iron oxide water dispersion, Taki Chemical Co., Ltd.), zirconium oxide water dispersion (Sigma-Aldrich), ITRW15WT%-G30 (indium tin oxide water dispersion, CIK NanoTech), provided that water as the dispersing medium may be replaced by a polar organic solvent prior to use. Also, these water dispersions may be surface treated with conventional silane coupling agents or dispersants prior to solvent replacement.

Starting colloidal dispersion

Step (a) preferably uses a colloidal dispersion of inorganic oxide particles in water as a dispersing medium. Water may be fresh water such as tap water, industrial water, well water, natural water, rain water, distilled water, or deionized water, with deionized water being preferred. Deionized water may be produced by a pure water production unit, for example, FW-10 by Organo Corp. or Direct-QUV3 by Merck Millipore Corp. The dispersing medium may contain a water-miscible monohydric alcohol which is introduced during the step of preparing a water-dispersed colloidal solution to be described later. The water-miscible monohydric alcohol may also be contained as originating from the co-solvent used in the preparation of core/shell particles and hydrolytic by-products of sol-gel reaction on metal alkoxide.

The starting colloidal dispersion as provided in step (a) preferably has a dispersoid concentration of 1 to 35% by weight, more preferably 5 to 30% by weight, and even more preferably 10 to 25% by weight. A dispersoid concentration of less than 1 wt% is undesirable because of low production efficiency. A dispersoid concentration of more than 35 wt% is undesirable because gelation is likely to occur under certain conditions such as pH and temperature.

In the case of inorganic particles having a siloxane coating layer of $SiR^1O_{3/2}$ units on their surface, step (a) includes step (a-1) of surface treating inorganic particles with a silane compound and/or (partial) hydrolytic condensate thereof, and step (a-2) of replacing the solvent by a polar organic solvent. In the case of inorganic particles not having a siloxane coating layer of $SiR^1O_{3/2}$ units on their surface, step (a) may be only step (a-2).

Step (a-1)

Step (a-1) is to add a silane compound having the general formula (I) and/or (partial) hydrolytic condensate thereof to inorganic particles for thereby modifying the particle surface.

$$R^{19}Si(Y)_3 \qquad (I)$$

Herein $R^{19}$ is each independently hydrogen or a group selected from among a $C_1$-$C_{20}$ alkyl group, $C_2$-$C_{20}$ alkenyl group, $C_6$-$C_{20}$ aryl group, and (poly)dimethylsiloxy group of up to 50 silicon atoms, which may be substituted with a (meth)acrylic, oxiranyl, amino, mercapto, isocyanate or fluorine radical. Y is a group selected from among alkoxy, acetoxy, enol and chlorine.

Suitable alkyl groups are $C_1$-$C_6$ alkyl groups, typically methyl and ethyl. Suitable aryl groups are $C_6$-$C_{10}$ aryl groups, typically phenyl. Suitable (poly)dimethylsiloxy groups are of 1 to 50 silicon atoms, especially 1 to 30 silicon atoms.

Exemplary of the silane compound having formula (I) are alkoxysilanes including hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, phenyltrimethoxysilane, phenyltriethoxysilane,

tris(3-trimethoxysilylpropyl)isocyanurate and tris(3-triethoxysilylpropyl)isocyanurate in which isocyanate groups are bonded together; and partial hydrolytic condensates of methyltrimethoxysilane, which are commercially available as KC-89S and X-40-9220 from Shin-Etsu Chemical Co., Ltd.; and partial hydrolytic condensates of methyltrimethoxysilane and γ-glycidoxypropyltrimethoxysilane, which are commercially available as X-41-1056 from Shin-Etsu Chemical Co., Ltd. Also included are allylsilanes such as triallylmethylsilane, triallylethylsilane, and triallylisopropylsilane; acetoxysilanes such as triacetoxymethylsilane, triacetoxyethylsilane, triacetoxypropylsilane, and triacetoxyphenylsilane; chlorosilanes such as trichloromethylsilane, trichloroethylsilane, trichloropropylsilane, and trichlorophenylsilane; and enol silanes such as triisopropenyloxymethylsilane, ethyltriisopropenyloxysilane, triisopropenyloxypropylsilane, and phenyltriisopropenyloxysilane.

Examples of the silane compound having formula (I) wherein $R^{19}$ is (poly)dimethylsiloxane include compounds having the general formula (II).

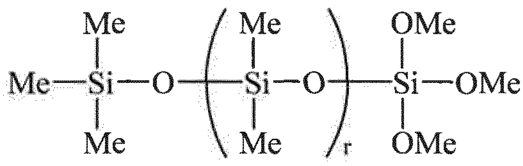

(II)

In formula (II), r is preferably an integer of 0 to 50, more preferably 5 to 40, and even more preferably 10 to 30. If r is more than 50, undesirably the compound may become stronger in silicone oil nature so that the solubility of surface treated organosol in various resins is restricted. The compound of formula (II) having an average structure wherein r=30 is commercially available as X-24-9822 from Shin-Etsu Chemical Co., Ltd.

The amount of the silane compound added is preferably 0.5 to 50 times, more preferably 1 to 25 times, and even more preferably 2 to 10 times the solids weight of the starting colloidal water dispersion. If the amount of the silane compound added is more than 50 times the solids weight of the starting colloidal water dispersion, then gelation may occur. If the amount of the silane compound added is less than 0.5 time the solids weight of the starting colloidal water dispersion, then agglomeration may occur due to short coverage.

The silane compound may be added by any techniques such as dropwise addition in liquid, dropwise addition out of liquid, and addition in portions, with the dropwise addition in liquid being preferred.

In step (a-1), an acid or base catalyst for promoting surface treatment may be added if desired. Suitable base catalysts include potassium hydroxide, sodium hydroxide, potassium carbonate, sodium carbonate, and basic ion exchange resins. Suitable acid catalysts include hydrochloric acid, sulfuric acid, methanesulfonic acid, trifluoromethanesulfonic acid, acetic acid, and cation exchange resins. Examples of the cation exchange resin include Amberlite® (Organo), Lewatit® (Lanxess), Purolite® (Purolite), and Muromac® (Muromachi Chemicals Inc.). The catalyst is preferably used in an amount of 0.01 to 20% by weight, more preferably 0.1 to 10% by weight, and even more preferably 1 to 5% by weight based on the weight of inorganic particles. If the amount of the catalyst is more than 20 wt%, undesirably rapid reaction takes place and is difficult to control. If the amount of the catalyst is less than 0.01 wt%, undesirably little reaction takes place.

When the silane compound is added, the colloidal water dispersion is preferably at a temperature of 0 to 45°C, more preferably 5 to 40°C, and even more preferably 10 to 35°C. At a temperature below 0°C, undesirably the dispersion can be altered via a state change by freezing. At a temperature above 45°C, undesirably the silane added may undergo unexpected hydrolytic condensation, and as a result of hydrolytic condensation, the reaction solution may elevate to a higher temperature below 70°C.

In step (a-1), the reaction solution may be diluted with an organic solvent, if desired. Suitable diluent solvents include monohydric alcohols such as methanol, ethanol, isopropyl alcohol and butanol; polyhydric alcohols such as ethylene glycol, propylene glycol and glycerol; ethers such as propylene glycol monomethyl ether, ethylene glycol monomethyl ether, glyme, and diglyme; ketones such as acetone and methyl isobutyl ketone; esters such as ethyl acetate and propylene glycol monomethyl ether acetate (PGMEA); and reactive esters such as hexanediol diacrylate, trimethylolpropane triacrylate, pentaerythritol tetraacrylate, and dipentaerythritol hexaacrylate. Inter alia, ethanol and isopropyl alcohol are preferred. Dilution is preferably carried out in order to avoid solvent shock in the subsequent step (a-2), but not essential. The dilution rate is preferably 1 to 20 times, more preferably 2 to 15 times, and even more preferably 3 to 10 times. A dilution rate of less than 1 may be too low to exert the intended solvent shock mitigating effect. If the dilution rate is more than 20 times, the subsequent step may take an unnecessary long treatment time.

Step (a-2)

Step (a-2) is to replace the dispersing medium of the reaction solution by a polar organic solvent. If necessary,

the dispersion may be concentrated by ultrafiltration to exude the dispersing medium. The dispersing medium may contain water contained in the water dispersion prepared in step (a-1), alcohols derived from the silicon compound added and/or hydrolytic condensate thereof and/or silicates formed by hydrolytic condensation, and organic solvents. By exudation of such complex system dispersion, the dispersion in the filtration chamber may be concentrated to a solids concentration of preferably 1 to 30% by weight, more preferably 5 to 25% by weight, and even more preferably 10 to 20% by weight. While the dispersing medium to be exudated herein is a complex mixture, a porous ceramic filter is advantageously used. Although the conventional technique recommends the use of hollow fiber membrane for the removal of salts from water, the hollow fiber membrane can be clogged on passage of fine particle dispersion. In the region covering removal of fine particles, concentration and solid-liquid separation, an organic polymer base ultrafiltration membrane is often used. However, if an organic solvent is contained, the filtration membrane will swell and become out of use. Therefore, for solid-liquid separation and concentration of an organic solvent-containing sample, an inorganic ceramic filter is effective.

For ultrafiltration, a filter including an inorganic ceramic membrane having an average pore size of preferably 5 nm to less than 20 nm, more preferably 6 nm to less than 18 nm, and most preferably 7 nm is used. The filter is preferably a rotatable disk. The inorganic ceramic membrane may be prepared by any well-known techniques. The materials of which the inorganic ceramic membrane is made include spinel, alumina, titania and zirconia base materials. For example, the spinel base material may be synthesized by the known technique (Ueno et al., Journal of Physics: Conference Series 2009, Vol. 165, No. 1, Fabrication of porous magnesium spinel with cylindrical pores by unidirectional solidification, or Zhang, Guo-Chang, et al., 2000, Vol. 2000, No. 03, MgAl2O Ultrafiltration Ceramic Membrane Derived from Mg-Al Double Alkoxide). Preferably the pore size is controlled by adjusting synthesis conditions and the growth of spinel crystal. The filter is preferably formed by depositing a surface layer having a uniform pore size on a porous disk-shaped unglazed ceramic plate of alumina or the like, by epitaxial growth. The porous disk of alumina used herein is typically one having a pore size of 0.05 to 1 $\mu$m. The surface layer has an average pore size of preferably 5 nm to less than 20 nm, more preferably 6 nm to less than 18 nm, and most preferably 7 nm. With respect to the size of the disk-shape filter, its diameter is preferably 100 mm to less than 500 mm, more preferably 120 mm to less than 300 mm, and even more preferably 140 mm to 200 mm. If the diameter is less than 100 mm, undesirably little shear stress is applied upon rotation, and a certain surface area is not ensured. If the diameter exceeds 500 mm, then an extra torque may be required for rotation. Also a filter with too large a diameter is prone to breakage and difficult to handle. The thickness of the filter is preferably 1 mm to less than 10 mm, more preferably 3 mm to less than 5 mm. A filter with a thickness of less than 1 mm may lack mechanical strength whereas a filter with a thickness in excess of 10 mm may be unfavorable in providing the filtration chamber with a certain volume. The filter may be fabricated by the well-known technique, or commercially available filters may be used.

The pore size of the filter used in the solvent replacement step is preferably determined by electron microscopy. The electron microscope used to this end may be a scanning electron microscope, transmission electron microscope or atomic force microscope.

In the solvent replacement step, the dispersing medium is exudated under a static pressure of preferably less than 0.5 MPa, more preferably less than 0.4 MPa, even more preferably less than 0.3 MPa, and most preferably less than 0.2 MPa, and at least 0.03 MPa. If the static pressure is equal to or more than 0.5 MPa, the selection of interface for the ultrafiltration system may be restricted. A static pressure of less than 0.03 MPa may fail in efficient exudation. The static pressure is preferably achieved by hydraulic pressure or compression pneumatic pressure, using a hydraulic head tube whose surface is in contact with air or a closed system. Especially the compression pneumatic pressure system is preferred because the unit is compact. Compression air may be readily produced by any well-known techniques or commercially available compressors.

In the solvent replacement step, a shear stress of preferably 0.1 to 10 Pa, more preferably 0.5 to 5 Pa, and even more preferably 1 to 5 Pa is applied to the dispersion via the filter. The shear stress may be achieved by fluidization of the dispersion or by rotation of the disk-shaped filter. When the shear stress is achieved by rotation of the filter, desirably a high shear rate is available at the filter surface. The shear stress may be computed from the wall-to-wall distance in the filtration chamber and the rotational speed. If necessary, the filtration chamber may be equipped with an appropriate baffle. The baffle is preferably installed for the purpose of reducing the wall-to-wall distance in the filtration chamber. It is a well-known practice that the shear stress is increased by utilizing rotation and baffle. A maximum shear stress ($\tau$) acting on a circumference may be computed, for example, according to equation (1):

$$\tau = (\eta \cdot \pi \cdot \phi \cdot \omega)/L \ [\mathrm{Pa}] \qquad \text{equation (1)}$$

wherein $\phi$ is a diameter (m) of the disk-shaped filter, $\omega$ is a rotational speed (rps) of the filter, L is a wall-to-wall distance (m) between filter and filtration chamber, $\pi$ is circle ratio, and $\eta$ is a viscosity (Pa·s) of the dispersion. Assuming an example wherein diameter $\phi$ = 0.15 m, filter rotational speed $\omega$ = 16.7 rps ($\cong$ 1,000 rpm), circle ratio $\pi$ = 3.14, dispersion

viscosity $\eta$ = 0.001 Pa·s, and wall distance L = 0.003 m, then $\tau$ = (0.001×3.14×0.15×16.7)/0.003 ≅ 2.6 Pa. The shear stress may be controlled to fall in the preferred range by changing parameters $\phi$, $\omega$ and L.

The rotational energy applied to the dispersion in the solvent replacement step is preferably prescribed by the shear stress, but may also be prescribed by a fluid state. The fluid state may be prescribed by Reynolds number. The agitation Reynolds number is preferably 3,000 to 5,000,000, more preferably 5,000 to 1,000,000, and even more preferably 10,000 to 500,000. A Reynolds number of less than 3,000 indicates laminar flow agitation and hence, difficulty of efficient dispersion, whereas a Reynolds number of more than 5,000,000 may be unfavorable from the aspect of industrial efficiency because agitation requires an unnecessarily large amount of energy. It is noted that the Reynolds number (Re) may be determined from equation (2):

$$Re = \rho \cdot \omega \cdot \phi^2 / \eta \qquad \text{equation (2)}$$

wherein $\rho$ is a density (kg/m$^3$), $\omega$ is a rotational speed (rps), $\phi$ is a filter diameter (m) and $\eta$ is a viscosity (Pa·s).

The inorganic particle dispersion used herein generally has a density $\rho$ of 900 to 2,000 kg/m$^3$, preferably 1,000 to 1,500 kg/m$^3$, and a viscosity $\eta$ of 0.001 to 0.05 Pa·s, preferably 0.002 to 0.01 Pa·s. For example, when a titanium oxide dispersion with $\rho$ = 1,000 kg/m$^3$ and $\eta$ = 0.001 Pa·s is treated by a disk-shaped filter having $\phi$ = 0.15 m at $\omega$ = 16.7 rps, Re is computed to be ~3.8×10$^5$. Re can be adjusted to fall in the desired range by an appropriate choice of $\omega$ and $\phi$. For agitation, the method of improving agitation efficiency using a reactor equipped with a baffle may be practiced.

The solvent replacement step is preferably performed at a temperature of 5 to 80°C, more preferably 10 to 60°C, even more preferably 15 to 50°C, and most preferably 20 to 40°C. Below 5°C, the dispersion may freeze. A temperature above 80°C causes the dispersing medium to volatilize off, giving rise to a problem to the working environment, and/or provides reaction energy to a reactive ester, if used, causing gelation. In general, the viscosity of the dispersion depends on the temperature. Since the viscosity affects rotational torque, the solvent replacement step may be performed while adjusting the temperature so that any extra load may not be applied to an electromagnetic rotating machine and/or generator.

In the solvent replacement step, it is also possible to remove unreacted compounds and by-products by continuous ultrafiltration, if necessary.

Examples of the organic solvent include mono- and polyhydric alcohols such as methanol, ethanol, 1-propanol, 2-propanol, cyclopentanol, ethylene glycol, propylene glycol, $\beta$-thiodiglycol, butylene glycol and glycerol; ethers such as diethyl ether, dipropyl ether, cyclopentyl methyl ether, ethylene glycol dimethyl ether, diethylene glycol dimethyl ether, triethylene glycol dimethyl ether, ethylene glycol monomethyl ether, ethylene glycol monoethyl ether, ethylene glycol monopropyl ether, ethylene glycol monobutyl ether, propylene glycol monomethyl ether, propylene glycol monoethyl ether, propylene glycol monopropyl ether, propylene glycol monobutyl ether, butylene glycol monomethyl ether, butylene glycol monoethyl ether, butylene glycol monopropyl ether, and butylene glycol monobutyl ether; esters such as methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutyrate, propylene glycol diacetate, propylene glycol dipropionate, propylene glycol dibutyrate, ethylene glycol methyl ether acetate, propylene glycol methyl ether acetate, butylene glycol monomethyl ether acetate, ethylene glycol ethyl ether acetate, propylene glycol ethyl ether acetate, and butylene glycol monoethyl ether acetate; ketones such as acetone, diacetone alcohol, diethyl ketone, methyl ethyl ketone, methyl isobutyl ketone, methyl n-butyl ketone, dibutyl ketone, cyclopentanone, cyclohexanone, cycloheptanone, and cyclooctanone; amides such as dimethylformamide, dimethylacetamide, tetraacetylethylenediamide, tetraacetylhexamethylenetetramide, and N,N-dimethylhexamethylenediamine diacetate. Of these, methanol, ethanol, isopropyl alcohol and n-propyl alcohol are preferred for dispersion of inorganic particles and ease of distillation of the dispersing medium.

A volume of the organic solvent used in the solvent replacement step is preferably 1 to 20 times, more preferably 2 to 10 times, and even more preferably 3 to 8 times the volume of the filtration chamber. A less than 1 time volume may be insufficient for solvent replacement whereas a more than 20 time volume may be undesirable from the aspect of industrial efficiency.

In the case of inorganic particles not having a siloxane coating layer of $SiR^1O_{3/2}$ units on their surface, step (a-1) is unnecessary and only step (a-2) is performed. In this case, when inorganic particles are furnished as a dispersion in water, solvent replacement is performed as described above. When inorganic particles are furnished in powder form, they may be dispersed in the organic solvent. When inorganic particles are furnished as a dispersion in the organic solvent, step (a-2) is unnecessary.

Step (b)

Step (b) includes subjecting a cyclic siloxane in admixture with the inorganic particle dispersion resulting from step (a) to ring-opening polymerization.

In general, for the surface modification of particles with a graft polymer, there are known two methods, a method of substituting a previously molecular weight built-up polymer to the particle surface and a method of growing a polymer from the particle surface as a starting point. The former method is difficult to graft the polymer to the particle surface in a high density because the polymer reduces its reactivity at the end as its molecular weight increases. The latter method of growing a polymer from the particle surface as starting point in the co-presence of a low molecular weight siloxane having relatively high reactivity, as employed in the invention, is easy to modify the particle surface in a high density because once a monomer is grafted to the particle surface, it grows into a higher molecular weight form. In addition, since polymerization reaction takes place on the particle surface, the synthesis of a polymer before particle modification is unnecessary. Then, the latter method is superior in operation efficiency to the former method.

The inorganic particle dispersion provided in step (a) has a dispersoid concentration of preferably 1 to 30% by weight, more preferably 2 to 20% by weight, and even more preferably 5 to 10% by weight. A concentration of less than 1 wt% of the dispersoid may lead to low manufacture efficiency whereas a concentration of more than 30 wt% of the dispersoid may cause particles to agglomerate together in the complexing step.

Cyclic siloxane

In the method for preparing the inorganic particle-polysiloxane composite, the cyclic siloxane subject to ring-opening polymerization is at least one cyclic siloxane having the general formula (1).

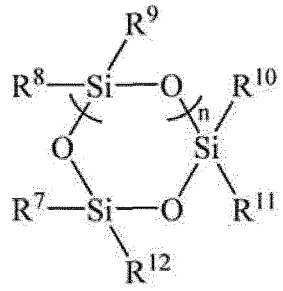

(1)

Herein $R^7$, $R^8$, $R^9$, $R^{10}$, $R^{11}$ and $R^{12}$ are each independently hydrogen or a group selected from the group consisting of a $C_1$-$C_{20}$ alkyl group, $C_2$-$C_{20}$ alkenyl group, $C_6$-$C_{20}$ aryl group, and (poly)dimethylsiloxy group of up to 50 silicon atoms, which may be substituted with a (meth)acrylic, oxiranyl or fluorine radical, and n is an integer of 0 to 10.

In formula (1), $R^7$ to $R^{12}$ are as exemplified above for $R^2$ to $R^6$. Examples of the cyclic siloxane include hexamethylcyclotrisiloxane, octamethylcyclotetrasiloxane, decamethylcyclopentasiloxane, dodecamethylcyclohexasiloxane, hexaphenylcyclotrisiloxane, octaphenylcyclotetrasiloxane, 2,4,6,8-tetramethylcyclotetrasiloxane, 1,3,5-tris(3,3,3-trifluoropropyl)-1,3,5-trimethylcyclotrisiloxane, 1,3,5-trimethyl-1,3,5-trivinylcyclotrisiloxane, and 2,4,6,8-tetramethyl-2,4,6,8-tetravinylcyclotetrasiloxane. Among others, preference is given to at least one siloxane selected from among hexamethylcyclotrisiloxane, octamethylcyclotetrasiloxane, decamethylcyclopentasiloxane, dodecamethylcyclohexasiloxane, and 2,4,6,8-tetramethylcyclotetrasiloxane.

The cyclic siloxane is added in an amount of preferably 10 to 1,000 parts by weight, more preferably 50 to 1,000 parts by weight, and even more preferably 100 to 500 parts by weight per 100 parts by weight of the inorganic particles. If the amount of cyclic siloxane is less than 10 parts by weight per 100 parts by weight of the inorganic particles, undesirably surface treatment may be insufficient, with possible agglomeration.

Ring-opening polymerization of the cyclic siloxane is carried out at a liquid temperature of preferably 25 to 150°C, more preferably 40 to 130°C, and even more preferably 60 to 100°C. At a liquid temperature below 25°C, ring-opening polymerization and grafting to inorganic particles may not take place sufficiently. A liquid temperature above 150°C may cause the cyclic siloxane to evaporate off and disappear from within the reaction system.

An acid or base catalyst may be used for the purpose of promoting complexing reaction between inorganic particles and the polysiloxane. Suitable acid catalysts include acetic acid, hydrochloric acid, sulfuric acid, methanesulfonic acid, trifluoromethanesulfonic acid, and p-toluenesulfonic acid. Suitable base catalysts include sodium hydroxide, potassium hydroxide, sodium methoxide, sodium ethoxide, potassium methoxide, potassium ethoxide, and potassium siliconate. An appropriate catalyst must be chosen from these compounds depending on the type of cyclic siloxane. For example, when a cyclic siloxane having a hydrosilyl group is the reactant, an acid catalyst is adequate. The amount of

the catalyst added is preferably 10 to 0.01% by weight, more preferably 5 to 0.1% by weight based on the cyclic siloxane, but not limited thereto.

If added, the acid or base catalyst may be removed from the system by suitable means such as neutralization with base or acid, or adsorption by an inorganic oxide having an ion trapping ability.

In step (b), the ring-opening polymerization of the cyclic siloxane may be carried out in the presence of a silane compound having the general formula (2):

$$R^{13}R^{14}Si(OR^{15})^2 \qquad (2)$$

wherein $R^{13}$ and $R^{14}$ are each independently hydrogen or a group selected from the group consisting of a $C_1$-$C_{20}$ alkyl group, $C_2$-$C_{20}$ alkenyl group, $C_6$-$C_{20}$ aryl group, and (poly)dimethylsiloxy group of up to 50 silicon atoms, which may be substituted with a (meth)acrylic, oxiranyl or fluorine radical and $R^{15}$ is hydrogen or an alkyl group having up to 6 carbon atoms, and/or a hydrolytic condensate thereof as a polymer chain extending (D unit) component. Thereafter, the dispersing medium is distilled off, yielding the inorganic particle-polysiloxane composite. The amount of the silane compound having formula (2) added is preferably up to 1 mole equivalent, more preferably up to 0.5 mole equivalent, relative to the cyclic siloxane. More than 1 mole equivalent of the silane compound is undesirable because the progress of polymerization and hence grafting may be retarded. The co-presence of the polymer chain extending component enables to introduce a variety of functional groups onto the polysiloxane chain, which enable refraction control, improvement in compatibility with dispersing medium, viscosity control, or introduction of reactive side chain. It is noted that when the silane compound having formula (2) and/or hydrolytic condensate thereof is used, the amount of the silane compound added is preferably at least 0.01 mole equivalent, more preferably at least 0.05 mole equivalent, relative to the cyclic siloxane.

Examples of the silane compound having formula (2) include dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, phenylmethyldiethoxysilane, diphenyldimethoxysilane, diphenyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, N-(2-aminoethyl)aminopropylmethyldimethoxysilane.

In step (b), the ring-opening polymerization of the cyclic siloxane may also be carried out in the presence of a silicon compound having the general formula (3) or (4):

$$R^{16}R^{17}R^{18}Si\ (X) \qquad (3)$$

$$R^{16}R^{17}R^{18}SiOSiR^{16}R^{17}R^{18} \qquad (4)$$

wherein $R^{16}$, $R^{17}$ and $R^{18}$ are each independently hydrogen or a group selected from the group consisting of a $C_1$-$C_{20}$ alkyl group, $C_2$-$C_{20}$ alkenyl group, $C_6$-$C_{20}$ aryl group, and (poly)dimethylsiloxy group of up to 50 silicon atoms, which may be substituted with a (meth)acrylic, oxiranyl or fluorine radical and X is a group selected from the group consisting of alkoxy, allyl, acetoxy, enol, and chlorine, as a polymer chain terminating (M unit) component. The amount of the silicon compound is up to 100 parts by weight per 100 parts by weight of the cyclic siloxane. Thereafter, the dispersing medium is distilled off, yielding the inorganic particle-polysiloxane complex. The co-presence of the polymer chain terminating component enables to introduce a variety of functional groups onto the polysiloxane chain at the end, which enable improvement in shelf stability, improvement in compatibility with dispersing medium, viscosity control, or introduction of reactive terminal.

The amount of the M unit component added is preferably up to 100 parts by weight, more preferably up to 50 parts by weight per 100 parts by weight of the cyclic siloxane. More than 100 parts by weight of the M unit component is undesirable because the growth of polysiloxane may be retarded and dispersibility may be insufficient. When the M unit component is added, the amount is preferably at least 0.01 part, more preferably at least 0.1 part by weight per 100 parts by weight of the cyclic siloxane.

Examples of the silane compound having formula (3) include alkoxysilanes such as trimethylmethoxysilane, trimethylethoxysilane, triethylmethoxysilane, n-propyldimethylmethoxysilane, n-propyldiethylmethoxysilane, isopropyldimethylmethoxysilane, isopropyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, and n-decyldimethylethoxysilane; silanols such as trimethylsilanol, triethylsilanol, n-propyldimethylsilanol, n-propyldiethylsilanol, isopropyldimethylsilanol, isopropyldiethylsilanol, propyldimethylsilanol, n-butyldimethylsilanol, n-hexyldimethylsilanol, n-pentyldimethylsilanol, and n-decyldimethylsilanol; allylsilanes such as allyltrimethylsilane, allyltriethylsilane, and allyltriisopropylsilane; acetoxysilanes such as acetoxytrimethylsilane, acetoxytriethylsilane, acetoxytripropylsilane and acetoxytriphenylsilane; chlorosilanes such as chlorotrimethylsilane, chlorotriethylsilane, chlorotripropylsilane, and chlorotriphenylsilane; and enol silanes such as isopropenyloxytrimethylsilane, triethylisopropenyloxysilane, isopropenyloxytripropylsilane, and triphenylisopropenyloxysilane.

Examples of the siloxane compound having formula (4) include hexamethyldisiloxane, hexaethyldisiloxane, hexaphenyldisiloxane, 1,1,3,3-tetramethyldisiloxane, 1,3-diethynyl-1,1,3,3-tetramethyldisiloxane, 1,3-divinyl-1,1,3,3-tetramethyldisiloxane, 1,1,3,3-tetraphenyl-1,3-divinyldisiloxane, 1,3-bis(mercaptopropyl)tetramethyldisiloxane, 1,3-bis(aminopropyl)tetramethyldisiloxane, 1,3-bis(acetoxypropyl)tetramethyldisiloxane, and 1,3-bis(acryloyloxypropyl)tetramethyldisiloxane.

Step (c)

The method may further comprise the step (c) of removing the polar organic solvent as the dispersing medium from the dispersion of the inorganic particle-polysiloxane composite resulting from step (b). The removal of the dispersing medium may be carried out by suitable means such as distillation or solvent replacement via ultrafiltration. When the dispersing medium is removed by distillation, heating promotes a molecular weight buildup of polysiloxane parallel to the removal of the dispersing medium whereby the inorganic particle-polysiloxane composite coated with a higher molecular weight polysiloxane may be obtained.

The removal of the dispersing medium by distillation is preferably carried out under a pressure of 200 to 760 mmHg, more preferably 300 to 760 mmHg, and even more preferably 400 to 760 mmHg. Under a pressure of lower than 200 mmHg, undesirably the operation may be difficult to control because of bumping of the mixture. A pressure of higher than 760 mmHg may prevent the polar organic solvent from evaporating.

Distillation is preferably performed at a temperature of 50 to 250°C, more preferably 60 to 200°C, and even more preferably 80 to 150°C. A temperature below 50°C is undesirable because distillation may take a time whereas at a temperature above 250°C, the organosol may be altered. The pressure is adjusted such that distillation may be performed at a temperature in the range.

The heat required for distillation may be provided by suitable heating means such as heat exchange with a heating medium, induction heating or microwave heating.

Step (d)

In the method, there may be included, after step (b) or (c), a further step (d) of adding a cyclic siloxane of formula (1), a polymer chain extending component of formula (2) and/or a polymer chain terminating component of formula (3) or (4) and conducting reaction again. By adding step (d), even a compound which does not dissolve in the polar solvent prior to step (b) can be introduced into the polysiloxane graft moiety, which enable fine control of physical properties including refraction control, viscosity control, improvement in shelf stability, improvement in compatibility with dispersing medium, improvement in dispersion, and introduction of reactive terminal or reactive side chain.

EXAMPLES

Examples of the invention are given below by way of illustration and not by way of limitation. All parts are by weight. The viscosity is measured at 25°C by an Ostwald viscometer.

EXAMPLE 1

Synthesis of water dispersion (TW-1) of core/shell type particles having core of titanium oxide-tin oxide complex oxide and shell of silicon oxide

Tin(IV) chloride pentahydrate (Wako Pure Chemical Industries, Ltd.), 1.8 g, was added to 66.0 g of 36 wt% titanium(IV) chloride aqueous solution (trade name TC-36 by Ishihara Sangyo Kaisha, Ltd.), thoroughly mixed, and diluted with 1,000 g of deionized water. 300 g of 5 wt% aqueous ammonia (Wako Pure Chemical Industries, Ltd.) was gradually added to the metal salt aqueous solution mixture to effect neutralization and hydrolysis, whereupon tin-containing titanium hydroxide precipitated. At this point, the titanium hydroxide slurry was at pH 8. The titanium hydroxide precipitate was deionized by repeating deionized water addition and decantation. To the tin-containing titanium hydroxide precipitate after deionization treatment, 100 g of 30 wt% aqueous hydrogen peroxide (Wako Pure Chemical Industries, Ltd.) was gradually added. Subsequent stirring at 60°C for 3 hours allowed for thorough reaction. Thereafter, pure water was added for concentration adjustment, yielding a semitransparent solution of tin-containing peroxotitanic acid (solids concentration 1 wt%). A 500-mL volume autoclave (trade name TEM-D500 by Taiatsu Techno Corp.) was charged with

350 mL of the synthesized peroxotitanic acid solution, which was subjected to hydrothermal treatment under conditions: 200°C and 1.5 MPa for 240 minutes. Thereafter, the reaction mixture in the autoclave was transferred through a sampling tube to a container kept in a water bath at 25°C. The reaction was quenched by this quick cooling, obtaining a complex oxide dispersion (i).

A separable flask equipped with a magnetic stirrer and thermometer was charged with 1,000 parts of the complex oxide dispersion (i), 100 parts of ethanol, and 2.0 parts of ammonia at room temperature (25°C), followed by magnetic stirring. The separable flask was placed in an ice bath and cooled until the temperature of the contents reached 5°C. Tetraethoxysilane (trade name KBE-04 by Shin-Etsu Chemical Co., Ltd.), 18 parts, was added to the separable flask, which was mounted in μReactor EX (Shikoku Instrumentation Co., Inc.) where microwave was applied at a frequency 2.45 GHz and a power 1,000 W for 1 minute while magnetic stirring was continued. The thermometer was monitored during the microwave heating step, confirming that the temperature of the contents reached 85°C. The mixture was filtered through qualitative filter (Advantec 2B), obtaining a dilute colloidal dispersion. By ultrafiltration through a Dynafilter (trade name DyF152/S by Mitsubishi Kakoki Kaisha, Ltd., MgAl2O disk (product number 2065181, type ϕ152/7 nm by ANDRITZ KMPT GmbH) having an average pore diameter of 7 nm), the dilute colloidal dispersion was concentrated to a solids concentration of 14 wt%, yielding a water dispersion (TW-1) of core/shell type particles consisting of a core of titanium oxide-tin oxide complex oxide and a shell of silicon oxide.

Synthesis of core/shell type particle ethanol dispersion (TE-1)

A 2-L four-neck separable flask equipped with a Dimroth condenser, nitrogen gas inlet tube, thermometer, and stirring impeller was charged with 300 g (solids concentration 14 wt%) of core/shell type particle water dispersion (TW-1) as inorganic particle dispersion and 3 g of sulfonic acid type cation exchange resin as catalyst. To the flask, 225 g of methyltrimethoxysilane (KBM-13 by Shin-Etsu Chemical Co., Ltd.) was added and vigorously stirred at 250 rpm. It was observed that the dispersion reacted with methyltrimethoxysilane on stirring and became uniform and that the temperature of the dispersion rose from 25°C to 52°C. The dispersion was heated and stirred at a temperature of 50°C for 2 hours, after which it was diluted by adding 750 g of ethanol while stirring at 250 rpm. The diluted dispersion was introduced into an ultrafiltration apparatus having a ceramic filter where washing and solvent replacement was carried out using ethanol until the filtrate became 800 g. The dispersion was taken out of the filtration chamber. There was obtained a core/shell type particle ethanol dispersion (TE-1) having a solids concentration of 17 wt%, a water concentration of 1.1 wt%, and a particle size of 3 nm. The particle size was a 50% cumulative particle size ($D_{50}$) in volume basis particle size distribution as measured by the dynamic light scattering method, specifically Nanotrac UPA-EX150 (Nikkiso Co., Ltd.).

Synthesis of polysiloxane-grafted inorganic oxide (TP-1)

A 2-L four-neck separable flask equipped with a Dimroth condenser, nitrogen gas inlet tube, thermometer, and stirring impeller was charged with 258 g of core/shell type particle ethanol dispersion (TE-1) having a solids concentration of 17 wt%, 634 g of ethanol, 179 g of octamethylcyclotetrasiloxane (D4) as cyclic siloxane, and 2 g of trifluoromethanesulfonic acid as catalyst. The contents were stirred at room temperature for 12 hours and refluxed for 2 hours to effect ring-opening polymerization. The ethanol was distilled off under atmospheric pressure, after which the reaction mixture was stirred at 110°C for a further 2 hours. The mixture was cooled to room temperature, whereupon 300 g of toluene and 8 g of synthetic hydrotalcite (trade name Kyoward 500 by Kyowa Chemical Industry Co., Ltd.) were added thereto. The hydrotalcite having the acid catalyst adsorbed thereto was removed by filtration, after which the toluene was distilled off under vacuum, yielding a liquid polysiloxane-grafted inorganic oxide (TP-1), i.e. inorganic oxide particle-polysiloxane composite having the polysiloxane grafted to the particle surface. On thermogravimetric analysis (TGA), the content of siloxane constituents in the overall inorganic particle-polysiloxane composite was 72 wt%. The analysis results are summarized in Table 1.

EXAMPLE 2

Synthesis of polysiloxane-grafted inorganic oxide (TP-2)

A liquid polysiloxane-grafted inorganic oxide (TP-2) was prepared by the same procedure as in TP-1 synthesis of Example 1 except that 12 g of TE-1, 28 g of ethanol, 18 g of D4, and 0.2 g of trifluoromethanesulfonic acid were used. On TGA, the content of siloxane constituents in the overall inorganic particle-polysiloxane composite was 88 wt%. The analysis results are summarized in Table 1.

EXAMPLE 3

Synthesis of polysiloxane-grafted inorganic oxide (TP-3)

A liquid polysiloxane-grafted inorganic oxide (TP-3) was prepared by the same procedure as in TP-1 synthesis of Example 1 except that 17 g of TE-1, 42 g of ethanol, 7 g of D4, and 0.2 g of trifluoromethanesulfonic acid were used. On TGA, the content of siloxane constituents in the overall inorganic particle-polysiloxane composite was 64 wt%. The analysis results are summarized in Table 1.

EXAMPLE 4

Synthesis of polysiloxane-grafted inorganic oxide (TP-4)

A 100-mL one-neck eggplant flask with a stirrer was charged with 5 g of TP-2 prepared in Example 2, 5 g of D4, and 0.05 g of trifluoromethanesulfonic acid as catalyst. The contents were stirred at 50°C for 3 hours. The reaction mixture was cooled to room temperature, whereupon 30 g of toluene and 0.2 g of synthetic hydrotalcite (Kyoward 500) were added thereto. The hydrotalcite having the acid catalyst adsorbed thereto was removed by filtration, after which the toluene was distilled off under vacuum, yielding a liquid polysiloxane-grafted inorganic oxide (TP-4). On TGA, the content of siloxane constituents in the overall inorganic particle-polysiloxane composite was 94 wt%. The analysis results are summarized in Table 1.

EXAMPLE 5

Synthesis of polysiloxane-grafted inorganic oxide (TP-5)

A polysiloxane-grafted inorganic oxide (TP-5) was prepared by the same procedure as in Example 4 except that 1 g of TP-2 prepared in Example 2, 9 g of D4, and 0.09 g of trifluoromethanesulfonic acid were used. On TGA, the content of siloxane constituents in the overall inorganic particle-polysiloxane composite was 97 wt%. The analysis results are summarized in Table 1.

EXAMPLE 6

Synthesis of polysiloxane-grafted inorganic oxide (TP-6)

A 100-mL one-neck eggplant flask with a stirrer was charged with 18 g of TP-1 prepared in Example 1, 2 g of hexamethyldisiloxane as M unit, 1 g of $H_2O$, and 0.02 g of trifluoromethanesulfonic acid as catalyst. The contents were stirred at 110°C for 6 hours. To the reaction mixture, 30 g of toluene, 1 g of sodium sulfate and 0.08 g of hydrotalcite (Kyoward 500) were added for dehydration and acid catalyst adsorption. The solids were removed by filtration, after which the toluene was distilled off under vacuum, yielding a polysiloxane-grafted inorganic oxide (TP-6). On TGA, the content of siloxane constituents in the overall inorganic particle-polysiloxane composite was 70 wt%. The analysis results are summarized in Table 2.

EXAMPLE 7

Synthesis of polysiloxane-grafted inorganic oxide (TP-7)

A liquid polysiloxane-grafted inorganic oxide (TP-7) was prepared by the same procedure as in TP-1 synthesis of Example 1 except that 12 g of TE-1, 28 g of ethanol, 12 g of D4, 2 g of hexamethyldisiloxane, 5 g of dimethoxydiphenylsilane (KBM-202 by Shin-Etsu Chemical Co., Ltd.), and 0.2 g of trifluoromethanesulfonic acid were used. On TGA, the content of siloxane constituents in the overall inorganic particle-polysiloxane composite was 89 wt%. The analysis results are summarized in Table 2.

COMPARATIVE EXAMPLE 1

From the core/shell type particle ethanol dispersion (TE-1) before cyclic siloxane treatment in Example 1, the dispersing medium was distilled off under vacuum, leaving a particle sample, which was analyzed by TGA. The content of siloxane constituents in the overall particles before cyclic siloxane treatment was 9 wt%. The ethanol dispersion (TE-1) was diluted with ethanol to form another sample having a solids concentration of 5 wt%, which was evaluated for

dispersibility. The results are summarized in Table 2.

COMPARATIVE EXAMPLE 2

From a silicon oxide isopropyl alcohol dispersion (IPA-ST-L by Nissan Chemical Industries, Ltd.) having a solids concentration of 30 wt%, the dispersing medium was distilled off under vacuum, leaving a sample, which was analyzed by TGA. The content of silicon oxide particles in the solids was 98 wt%. The dispersion IPA-ST-L was diluted with ethanol to form another sample having a solids concentration of 5 wt%, which was evaluated for dispersibility. The results are summarized in Table 2.

COMPARATIVE EXAMPLE 3

To 50 g of the core/shell type particle ethanol dispersion (TE-1), were added 8.5 g (equal to the weight of solids in the inorganic particles) of one end trimethoxysiloxy-capped dimethylpolysiloxane (X-24-9822 by Shin-Etsu Chemical Co., Ltd.) as polysiloxane having a reactive trimethoxysiloxy group at one end (Q unit) and 0.05 g of sulfonic acid type cation exchange resin. The mixture was refluxed for 6 hours. The dispersing medium was distilled off from the resulting sample under vacuum and the precipitated solids were collected by filtration. On TGA of the precipitated solids, the content of siloxane constituents in the overall inorganic particle-polysiloxane composite was 12 wt%. Based on this result and the weight loss of siloxane constituents in the particle core in Comparative Example 1, the content of grafted constituents consisting of D and M units was calculated to be 3 wt%. The results are summarized in Table 2.

EVALUATION OF INORGANIC PARTICLE-POLYSILOXANE COMPOSITE

Samples in Examples 1 to 7 and Comparative Examples 1 to 3 were evaluated by the following instruments and methods.

Contents of inorganic particles and polysiloxane constituents

Contents of inorganic particles and polysiloxane constituents were determined by considering the weight of the residue after TGA as the weight of inorganic particles in the sample, and the weight loss as the weight of the polysiloxane constituents. TGA was performed by Thermo Plus system (Rigaku Corp.). Analysis was made in a nitrogen atmosphere over a temperature range of 25°C to 900°C using a platinum pan.

$\sum D/\sum M$ value

Deuterated chloroform was added to a sample so as to provide a 40 wt% sample solution. Several droplets of pre-prepared 1M solution of chromium(III) acetylacetonate in deuterated chloroform (both by Kanto Chemical Co., Ltd.) were added to the sample solution, which was transferred to a NMR tube of PTFE with a diameter 10 mm and analyzed by $^{29}$Si-NMR spectroscopy. Analytical conditions included gated decoupling, a pulse sequence of 45° pulses and pulse interval 6 seconds, a magnetic field strength 11.75 T, and a scan number of 2,220 times. From the analytical results, the integrated value ($\sum D$) of $^{29}$Si-NMR signals assigned to all D units and the integrated value ($\sum M$) of $^{29}$Si-NMR signals assigned to all M units were computed, and their ratio $\sum D/\sum M$ was determined.

Dispersibility

Each sample was dispersed in a silicone oil in a concentration of 10 wt%. The dispersion was centrifuged by a tripod suspended centrifuge (H-100F by KOKUSAN Co., Ltd.) at a relative centrifugal force of 2000 (× g) for 60 minutes, after which precipitation or phase separation of inorganic particles was inspected. In terms of dispersibility, the sample was rated poor "×" when precipitation was observed in a silicone oil having a viscosity of 50 mm$^2$/s (KF-96-50CS by Shin-Etsu Chemical Co., Ltd.), good "○" when no precipitation was observed in the same silicone oil, and very good "◎" when no precipitation was observed even in a viscous silicone oil having a viscosity of 10,000 mm$^2$/s (KF-96H-10000CS by Shin-Etsu Chemical Co., Ltd.).

Table 1

| | Example | | | | |
|---|---|---|---|---|---|
| | 1 | 2 | 3 | 4 | 5 |
| Siloxane constituent content (wt%) | 72 | 88 | 64 | 94 | 97 |
| Inorganic particle content (wt%) | 28 | 12 | 36 | 6 | 3 |
| ∑D/∑M value | 7.3 | 7.1 | 4.9 | 48.2 | 150.1 |
| Dispersibility | ○ | ○ | ○ | ○ | ◎ |

Table 2

| | Example | | Comparative Example | | |
|---|---|---|---|---|---|
| | 6 | 7 | 1 | 2 | 3 |
| Siloxane constituent content (wt%) | 70 | 89 | 9 | | 12 |
| Inorganic particle content (wt%) | 30 | 11 | 91(1) | 98(1) | 88(2) |
| ∑D/∑M value | 6.5 | 7.7 | 0 | 0 | 27.1(3) |
| Dispersibility | ○ | ○ | × | × | × |

Notes:
(1) In Comparative Examples 1 and 2, the particle content was determined by TGA of the inorganic particle solids left after vacuum distillation of the dispersing medium.
(2) In Comparative Example 3, the particle content was determined by TGA of the inorganic particle solids left after vacuum distillation of the dispersing medium and inorganic particles collected by filtration from clear liquid left after vacuum distillation of the dispersing medium.
(3) In Comparative Example 3, the ∑D/∑M value of siloxane constituents was a measurement by $^{29}$Si-NMR of one end trimethoxysiloxy-capped dimethylpolysiloxane (X-24-9822 by Shin-Etsu Chemical Co., Ltd.) serving as the reactant.

In Examples 1 to 3, the inorganic particle-polysiloxane composite was synthesized by preparing an organosol consisting of inorganic particles as dispersoid and ethanol and/or IPA as dispersing medium, effecting ring-opening polymerization of a cyclic siloxane in the dispersion, and distilling off the dispersing medium. In Comparative Examples 1 and 2, the samples (TE-1 and IPA-ST-L) which had not been treated with cyclic siloxane could be dispersed in polar solvents such as alcohols, but not in non-polar solvents such as hexane and silicone oils, i.e. they agglomerated and precipitated. In contrast, the inorganic particle-polysiloxane composites of Examples 1 to 3 showed high dispersibility in hexane and silicone oils. It is presumed that the particles exhibited such high dispersibility because they became highly hydrophobic by the mechanism that ring-opening polymerization of cyclic siloxane and a reaction between a hydroxyl or alkoxy group on the inorganic particle surface and the end of polysiloxane took place concurrently, whereby the polysiloxane was grafted to the inorganic particle surface.

In Comparative Example 3 wherein the particles had one end trimethoxysiloxy-capped dimethylpolysiloxane (X-24-9822 by Shin-Etsu Chemical Co., Ltd.) grafted to their surface, although the ∑D/∑M value of the polysiloxane constituents was greater than in Examples 1 to 3, i.e. the chain length was longer, the particles did not exhibit dispersibility in hexane and silicone oils. As shown in Table 2, in Comparative Example 3, the polysiloxane coverage was less than 20 parts per 100 parts of the inorganic particles. This indicates that such low coverage is insufficient to avoid direct contact between inorganic particles. Additionally, a high-molecular-weight polysiloxane is difficult to graft to the particle surface in a high density because the high-molecular-weight polysiloxane is less reactive at the molecular end.

In Examples 1 to 3, the particles had polysiloxane grafted thereto in a higher density than the prior art, presumably because relatively reactive low-molecular-weight siloxane was grafted to the particle surface before polymer growth reaction took place on the particle surface. In Examples 4 and 5, the inorganic particle-polysiloxane composite prepared in Examples 2 was further reacted with cyclic siloxane, yielding composites having higher molecular weight polysiloxane grafted thereto. The resulting composites were thoroughly dispersible in very viscous silicone oils (viscosity 5,000 to 10,000 $mm^2/s$) in which general inorganic particles would be scarcely dispersed. This is presumably because the inorganic particles become highly hydrophobic due to the high-molecular-weight polysiloxane grafted thereto.

It is evident from the results in Tables 1 and 2 that as the amount of cyclic siloxane introduced becomes greater,

the ∑D/∑M value of polysiloxane becomes larger although no polymer chain terminating component (M unit) is introduced. Typically, ring-opening polymerization in the absence of any terminating component produces gum-like polysiloxane having a significantly high molecular weight. It is thus suggested that in Examples, the particle surface functions as a polymer chain terminating component, i.e. polysiloxane grows on the particle surface.

In Example 6, the inorganic particle-polysiloxane composite prepared in Example 1 was reacted with hexamethyldisiloxane for polymer terminal modification. FIG. 1 shows $^1$H-NMR spectra of the composites prepared in Examples 1 and 6. As seen from these NMR charts, the peak assigned to the terminal ethoxy group is significantly reduced after treatment, indicating a progress of terminal modification.

It has been demonstrated that the inorganic particle-polysiloxane composite of the invention can be prepared by using a versatile cyclic siloxane compound as the reactant and carrying out both synthesis of polysiloxane and grafting of polysiloxane to particle surface in a common reactor. The inorganic particle-polysiloxane composite can be dispersed in a variety of silicone oils and organic solvents in any desired concentration, and moreover homogeneously dispersed even in highly viscous silicone oils in which ordinary inorganic particles would be scarcely dispersed. Like typical silicone fluids, the composite has a viscosity, dispersibility and physical properties which are adjustable by increasing molecular weight, introducing crosslinking points, and effecting molecular modifications such as terminal modification. Since inorganic particle materials characterized by easy modification with functional groups and high dispersibility in non-polar solvents have not heretofore been reported, this invention is considered industrially unique and useful.

EXAMPLE 8

A mixture of 1 g of the polysiloxane-grafted inorganic oxide (TP-5) prepared in Example 5, 10g of polydimethylsiloxane oil having a vinyldimethylsiloxy group substituted at the end (viscosity 5,000 $mm^2/s$), 0.4 g of organohydrogenpolysiloxane (KE1800E by Shin-Etsu Chemical Co., Ltd.) as crosslinker, and 0.1 g of hydrosilylation catalyst (X-93-405 by Shin-Etsu Chemical Co., Ltd.) was deaerated and cast into a Teflon® coated mold of 6 cm × 3 cm × 0.1 cm, where it was addition cured at 150°C for 15 minutes, yielding a transparent silicone rubber having the inorganic particle-polysiloxane composite dispersed therein. The results are summarized in Table 3.

COMPARATIVE EXAMPLE 4

The same procedure as in Example 8 was repeated aside from using 0.2 g of core/shell type particle ethanol dispersion (TE-1) prepared in Example 1 instead of TP-5 in Example 12. There was obtained a silicone rubber containing inorganic particles. The results are summarized in Table 3.

COMPARATIVE EXAMPLE 5

A mixture of 10 g of polydimethylsiloxane oil having a vinyldimethylsiloxy group substituted at the end (viscosity 5,000 $mm^2/s$), 0.4 g of a crosslinker (KE1800E by Shin-Etsu Chemical Co., Ltd.), and 0.1 g of a hydrosilylation catalyst (X-93-405 by Shin-Etsu Chemical Co., Ltd.) was deaerated and cast into a Teflon® coated mold of 6 cm × 3 cm × 0.1 cm, where it was addition cured at 150°C for 15 minutes, yielding a transparent silicone rubber containing no inorganic particles. The results are summarized in Table 3.

EVALUATION OF SILICONE RUBBER CONTAINING INORGANIC PARTICLE POLYSILOXANE COMPOSITE

Samples in Example 8 and Comparative Examples 4 and 5 were evaluated by the following instruments and methods.

Particle content

The particle content was computed by considering the weight of the residue after TGA as the weight of inorganic particles and the weight loss as the weight of the polysiloxane constituents. TGA was performed by Thermo Plus system (Rigaku Corp.). Analysis was made in a nitrogen atmosphere over a temperature range of 25°C to 900°C using a platinum pan.

Haze measurement

A film sample 1 mm thick was measured for haze by a haze meter (NDH2000 by Nippon Denshoku Industries Co., Ltd.).

Visible light transmission

A film sample 1 mm thick was measured for transmittance by a spectrophotometer U-3900H (Hitachi High-Tech Science Corp.). The sample is rated good "○" for a transmittance of at least 80 in a wavelength range of 500 to 700 nm and poor "x" for a transmittance of less than 80 in a wavelength range of 500 to 700 nm.

Table 3

| | Example | Comparative Example | |
|---|---|---|---|
| | 8 | 4 | 5 |
| Particle content (wt%) | 0.3 | 0.3 | - |
| Haze (%) | 6.55 | 52.35 | 9.36 |
| Visible light transmittance | ○ | × | ○ |

While silicone rubber containing no inorganic particles was prepared in Comparative Example 5, silicone rubbers containing inorganic particles were prepared in Examples 8 and Comparative Example 4. In a dispersion of inorganic particles which were not treated with cyclic siloxane as in Comparative Example 4, the particles agglomerated in silicone oil, leading to an increase in light scattering, a lowering of transparency, and a substantial increase of haze. On the other hand, the silicone rubber containing the inorganic particle-polysiloxane composite treated with cyclic siloxane as in Example 8 had the advantage that light scattering was suppressed since the particles were thoroughly dispersed in silicone oil, and the transparency and haze values were at the same levels as the silicone rubber containing no inorganic particles in Comparative Example 5.

As seen from the UV/Vis transmittance spectra in FIG. 2, Comparative Example 4 had a substantially reduced transmittance in the visible light range of 500 to 700 nm due to white clouding while Example 8 maintained a high transparency, that is, substantially no decline of transmittance in the visible range compared to the inorganic particle-free sample in Comparative Example 5. In Comparative Example 4 containing UV-absorbing inorganic particles (titanium oxide), the light absorption near 300 nm was weak. In contrast, the samples of Example 8 containing an equivalent amount of the same inorganic particles were dramatically improved in light absorption at 300 nm and longer. This may be accounted for by the following mechanism. Particles in the sample of Comparative Example 4 had a significantly reduced surface area due to agglomeration, resulting in a substantial decline of light absorption efficiency. Particles in the sample of Example 8 were thoroughly dispersed, maintained the surface area substantially unchanged, and effectively absorbed light.

As described above, the silicone rubber obtained according to the invention has inorganic particles thoroughly dispersed in silicone, so that it may maintain transparency and also more effectively develop UV absorbing ability and other functions of inorganic particles in the silicone materials than the conventional materials. This invention is also industrially useful and expected to find application in many fields.

These Examples have been presented for the purpose of illustrating advantages of the invention and are not intended to limit the scope of the invention.

INDUSTRIAL APPLICABILITY

The inorganic particle-polysiloxane composite of the invention allows inorganic particles to be thoroughly dispersed in silicone materials and various organic materials containing no polar groups. Accordingly, the inorganic particle-polysiloxane composite may be applicable to coating compositions, light-emitting element encapsulants, heat-conductive compositions, heat-resistant compositions, UV-absorbing compositions and the like, and especially suited in fields where high transparency, weather resistance, and heat conductivity are required. Although various mechanical techniques have been used in these fields to disperse inorganic oxide particles uniformly, the use of the inorganic particle-polysiloxane composite which is fully compatible with a binder not only contributes to simplification of the technique, but also enables thorough dispersion of particles, allowing the particles to exert their functionality more effectively. Therefore, this invention spreads a choice of material on preparation of compositions and contributes to industrial advances in the art.

**Claims**

1. An inorganic particle-polysiloxane composite, comprising

inorganic particles of core/shell structure having a core comprising at least one compound selected from aluminum oxide, cerium oxide, titanium oxide, zinc oxide, indium tin oxide, zirconium oxide, tin oxide and iron oxide and a shell of silicon oxide around the core, and having a 50% cumulative particle size of 1 to 200 nm on volume basis particle size distribution as measured by the dynamic light scattering method, and
polysiloxane containing $SiR^2R^3O_{2/2}$ and $SiR^4R^5R^6O_{1/2}$ units grafted at least in part onto the particle surfaces, optionally via a siloxane coating layer containing $SiR^1O_{3/2}$ units, wherein the total amount of the siloxane constituents represented by $SiR^1O_{3/2}$, $SiR^2R^3O_{2/2}$ and $SiR^4R^5R^6O_{1/2}$ units is from 20 to 20,000 parts by weight per 100 parts by weight of the inorganic particles and a ratio $\sum D/\sum M$ is at least 3, where $\sum D$ is an integrated value of NMR signals assigned to all D units ($SiR^2R^3O_{2/2}$) on analysis by $^{29}Si$ nuclear magnetic resonance (NMR) spectroscopy, and $\sum M$ is an integrated value of NMR signals assigned to all M units ($SiR^4R^5R^6O_{1/2}$), and obtainable by effecting ring-opening polymerization of cyclic siloxane of the formula (1):

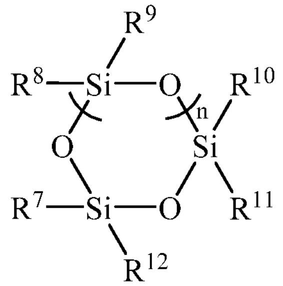

(1)

in a dispersion of the inorganic particles;
wherein in the above formulae $SiR^1O_{3/2}$, $SiR^2R^3O_{2/2}$ and $SiR^4R^5R^6O_{1/2}$:

each $R^1$ independently is hydrogen or a group selected from $C_1$-$C_{20}$ alkyl group, $C_2$-$C_{20}$ alkenyl group, $C_6$-$C_{20}$ aryl group and (poly)dimethylsiloxy group of up to 50 silicon atoms, which group may be substituted with (meth)acrylic, oxiranyl, amino, mercapto, isocyanate or fluorine radical,
each $R^2$, $R^3$, $R^4$ and $R^5$ independently is hydrogen or a group selected from $C_1$-$C_{20}$ alkyl group, $C_2$-$C_{20}$ alkenyl group, $C_6$-$C_{20}$ aryl group and (poly)dimethylsiloxy group of up to 50 silicon atoms, which group may be substituted with(meth)acrylic, oxiranyl or fluorine radical, and
$R^6$ is hydrogen or a group selected from $C_1$-$C_{20}$ alkyl group, $C_2$-$C_{20}$ alkenyl group, $C_6$-$C_{20}$ aryl group, (poly)dimethylsiloxy group of up to 50 silicon atoms, $C_1$-$C_{10}$ alkoxy group and hydroxyl group, which group may be substituted with (meth)acrylic, oxiranyl or fluorine radical,

and wherein in the above formula (1):
$R^7$, $R^8$, $R^9$, $R^{10}$, $R^{11}$ and $R^{12}$ are each independently hydrogen or a group selected from $C_1$-$C_{20}$ alkyl group, $C_2$-$C_{20}$ alkenyl group, $C_6$-$C_{20}$ aryl group, and (poly)dimethylsiloxy group of up to 50 silicon atoms, which group may be substituted with (meth)acrylic, oxiranyl or fluorine radical, and n is an integer of 0 to 10.

**2.** Inorganic particle-polysiloxane composite of claim 1 containing the polysiloxane component of the composite in an amount of 50 to 10,000 parts by weight per 100 parts by weight of the inorganic particles.

**3.** Inorganic particle-polysiloxane composite of claim 1 or 2 wherein the total of T units, that is, units of $SiR^1O_{3/2}$ structure, in the inorganic particle-polysiloxane composite is 10 to 50 parts by weight per 100 parts by weight of the inorganic particles.

**4.** Inorganic particle-polysiloxane composite of any one of claims 1 to 3 wherein
the total of D units, that is, units of $SiR^2R^3O_{2/2}$ structure, in the inorganic particle-polysiloxane composite is 50 to 1,000 parts by weight per 100 parts by weight of the inorganic particles, and/or
the ratio of the number of M units, that is, units of $SiR^4R^5R^6O_{1/2}$ structure, to the number of D units is up to 0.5/1.

**5.** Inorganic particle-polysiloxane composite of claim 1 or 2 wherein the ratio $\sum D/\sum M$ is at least 5.

**6.** Inorganic particle-polysiloxane composite of any one of the preceding claims wherein for the groups $R^1$, $R^2$, $R^3$, $R^4$, $R^5$ and $R^6$, $C_1$-$C_{20}$ alkyl groups are selected from methyl, ethyl, propyl, and butyl, $C_2$-$C_{20}$ alkenyl groups are vinyl or allyl, $C_1$-$C_{10}$ alkoxy groups are methoxy, ethoxy, propoxy or butoxy, $C_6$-$C_{20}$ aryl groups are phenyl, tolyl or xylyl

and (poly)dimethylsiloxy groups are of 1 to 30 silicon atoms.

**7.** A dispersion comprising an inorganic particle-polysiloxane composite of any one of claims 1 to 6 dispersed in a medium.

**8.** A dispersion of claim 7 wherein the medium is at least one compound selected from pentane, hexane, heptane, nonane, decane, benzene, toluene, o-xylene, m-xylene, p-xylene and a polysiloxane compound.

**9.** A dispersion of claim 8 wherein the medium comprises a said polysiloxane compound which is at least one compound selected from hexamethylcyclotrisiloxane, octamethylcyclotetrasiloxane, decamethylcyclopentasiloxane and dodecamethylcyclohexasiloxane.

**10.** A dispersion of claim 8 wherein the medium comprises a said polysiloxane compound which is polydimethylsiloxane having a kinematic viscosity of 50 to 100,000 $mm^2/s$ at 25°C.

**11.** A solid material comprising an inorganic particle-polysiloxane composite of any one of claims 1 to 6.

**12.** A solid material of claim 11 comprising a binder which is a silicone resin or silicone rubber.

**13.** A method for preparing an inorganic particle-polysiloxane composite of any one of claims 1 to 6, comprising the steps of:

(a) providing a dispersion of said inorganic particles in a polar organic solvent, and
(b) mixing the dispersion with at least one cyclic siloxane having the general formula (1), and subjecting the cyclic siloxane in the mixture to ring-opening polymerization,

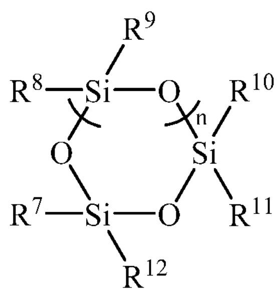

(1)

wherein $R^7$, $R^8$, $R^9$, $R^{10}$, $R^{11}$, $R^{12}$ and n are as defined above.

**14.** A method of claim 13 wherein step (a) includes surface treatment of the inorganic particles with a silane compound and/or a (partial) hydrolytic condensate thereof and dispersing the particles in the polar organic solvent.

**15.** A method of claim 13 or 14 wherein the polar organic solvent in step (a) is at least one solvent selected from methanol, ethanol, isopropyl alcohol and n-propyl alcohol.

**16.** A method of any one of claims 13 to 15 wherein step (b) is performed in the presence of an acid or base catalyst.

**17.** A method of any one of claims 13 to 16 wherein the cyclic siloxane is at least one compound selected from hexamethylcyclotrisiloxane, octamethylcyclotetrasiloxane, decamethylcyclopentasiloxane, dodecamethylcyclohexasiloxane, and 2,4,6,8-tetramethylcyclotetrasiloxane.

**18.** A method of any one of claims 13 to 17 wherein step (b) includes ring-opening polymerization of the cyclic siloxane in the presence of a silane compound and/or a hydrolytic condensate thereof as a polymer chain extending component, in an amount of up to 1 mole equivalent based on the cyclic siloxane, the silane compound having the general formula (2):

$$R^{13}R^{14}Si(OR^{15})_2 \qquad (2)$$

wherein $R^{13}$ and $R^{14}$ are each independently hydrogen or a group selected from $C_1$-$C_{20}$ alkyl group, $C_2$-$C_{20}$ alkenyl group, $C_6$-$C_{20}$ aryl group and (poly)dimethylsiloxy group of up to 50 silicon atoms, which may be substituted with (meth)acrylic, oxiranyl or fluorine radical, and $R^{15}$ is hydrogen or alkyl group having up to 6 carbon atoms.

**19.** A method of any one of claims 13 to 18 wherein step (b) includes ring-opening polymerization of the cyclic siloxane in the presence of a silicon compound as a polymer chain terminating component in an amount of up to 100 parts by weight per 100 parts by weight of the cyclic siloxane, the silicon compound having the general formula (3) or (4):

$R^{16}R^{17}R^{18}Si(X)$ (3)

$R^{16}R^{17}R^{18}SiOSiR^{16}R^{17}R^{18}$ (4)

wherein $R^{16}$, $R^{17}$ and $R^{18}$ are each independently hydrogen or a group selected from $C_1$-$C_{20}$ alkyl group, $C_2$-$C_{20}$ alkenyl group, $C_6$-$C_{20}$ aryl group and (poly)dimethylsiloxy group of up to 50 silicon atoms, which may be substituted with (meth)acrylic, oxiranyl or fluorine radical, and X is selected from alkoxy, allyl, acetoxy, enol and chlorine.

**20.** A method of any one of claims 13 to 19, further comprising the step (c) of removing the polar organic solvent after step (b).

**21.** A method of any one of claims 13 to 20, further comprising after step (b), a step (d) of adding further cyclic siloxane of formula (1), a polymer chain extending component of formula (2) as defined in claim 18 and/or a polymer chain terminating component of formula (3) or (4) as defined in claim 19 and conducting reaction again.

## Patentansprüche

**1.** Verbund aus anorganischen Teilchen und Polysiloxan, der Folgendes umfasst:

anorganische Teilchen mit Kern-Hülle-Struktur, die einen Kern, der zumindest eine aus Aluminiumoxid, Ceroxid, Titanoxid, Zinkoxid, Indiumzinnoxid, Zirconiumoxid, Zinnoxid und Eisenoxid ausgewählte Verbindung umfasst, und eine Hülle aus Siliciumoxid um den Kern aufweisen und die eine 50%ige kumulative Teilchengröße von 1 bis 200 nm bei einer Teilchengrößenverteilung auf Volumenbasis, wie mittels dynamischen Lichtstreuungsverfahrens gemessen, aufweisen, und
Polysiloxan, das $SiR^2R^3O_{2/2}$- und $SiR^4R^5R^6O_{1/2}$-Einheiten umfasst, die zumindest teilweise, gegebenenfalls über eine Siloxanbeschichtung, die $SiR^1O_{3/2}$-Einheiten enthält, auf die Teilchenoberflächen aufgepfropft sind, wobei die Gesamtmenge der durch $SiR^1O_{3/2}$-, $SiR^2R^3O_{2/2}$- und $SiR^4R^5R^6O_{1/2}$-Einheiten dargestellten Siloxanbestandteile 20 bis 20.000 Gewichtsteile pro 100 Gewichtsteile der anorganischen Teilchen beträgt und das Verhältnis $\Sigma P/\Sigma M$ zumindest 3 beträgt, wobei $\Sigma D$ bei Analyse mittels $^{29}Si$-Kernspinresonanz-(NMR-) Spektroskopie der Integralwert der allen D-Einheiten ($SiR^2R^3O_{2/2}$) zugeordneten NMR-Signale ist, und $\Sigma M$ der Integralwert der allen M-Einheiten ($SiR^4R^5R^6O_{1/2}$) zugeordneten NMR- ist, und das mittels Durchführung einer Ringöffnungspolymerisation von zyklischem Siloxan der Formel (1):

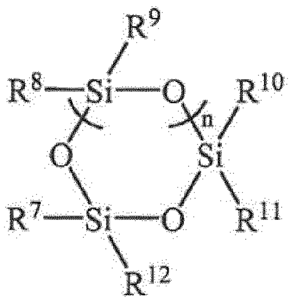

(1)

in einer Dispersion der anorganischen Teilchen erhältlich ist;
wobei in der vorstehenden Formeln $SiR^1O_{3/2}$, $SiR^2R^3O_{2/2}$ und $SiR^4R^5R^6O_{1/2}$:

die $R^1$ jeweils unabhängig Wasserstoff oder eine aus $C_1$-$C_{20}$-Alkylgruppen, $C_2$-$C_{20}$-Alkenylgruppen, $C_6$-$C_{20}$-Arylgruppen und (Poly-)Dimethylsiloxygruppen mit bis zu 50 Siliciumatomen ausgewählte Gruppe

sind, wobei die Gruppe gegebenenfalls mit (Meth)-acryl-, Oxiranyl-, Amino-, Mercapto-, Isocyanat- oder Fluorresten substituiert ist,
$R^2$, $R^3$, $R^4$ und $R^5$ jeweils unabhängig Wasserstoff oder eine aus $C_1$-$C_{20}$-Alkylgruppen, $C_2$-$C_{20}$-Alkenylgruppen, $C_6$-$C_{20}$-Arylgruppen und (Poly-)Dimethylsiloxygruppen mit bis zu 50 Siliciumatomen ausgewählte Gruppe sind, wobei die Gruppe gegebenenfalls mit (Meth)acryl-, Oxiranyl- oder Fluorresten substituiert ist, und
$R^6$ Wasserstoff oder eine aus $C_1$-$C_{20}$-Alkylgruppen, $C_2$-$C_{20}$-Alkenylgruppen, $C_6$-$C_{20}$-Arylgruppen und (Poly-)Dimethylsiloxygruppen mit bis zu 50 Siliciumatomen, $C_1$-$C_{10}$-Alkoxygruppen und Hydroxylgruppen ausgewählte Gruppe ist, wobei die Gruppe gegebenenfalls mit (Meth)acryl-, Oxiranyl- oder Fluorresten substituiert ist,

und wobei in der vorstehenden Formel (1):
$R^7$, $R^8$, $R^9$, $R^{10}$, $R^{11}$ und $R^{12}$ jeweils unabhängig Wasserstoff oder eine aus $C_1$-$C_{20}$-Alkylgruppen, $C_2$-$C_{20}$-Alkenylgruppen, $C_6$-$C_{20}$-Arylgruppen und (Poly-)Dimethylsiloxygruppen mit bis zu 50 Siliciumatomen ausgewählte Gruppe sind, wobei die Gruppe gegebenenfalls mit (Meth)acryl-, Oxiranyl- oder Fluorresten substituiert ist, und n eine ganze Zahl von 0 bis 10 ist.

**2.** Verbund aus anorganischen Teilchen und Polysiloxan nach Anspruch 1, der die Polysiloxankomponente des Verbunds in einer Menge von 50 bis 10.000 Gewichtsteilen pro 100 Gewichtsteile der anorganischen Teilchen enthält.

**3.** Verbund aus anorganischen Teilchen und Polysiloxan nach Anspruch 1 oder 2, wobei die Gesamtmenge von T-Einheiten, d. h. Einheiten mit $SiR^1O_{3/2}$-Struktur, in dem Verbund aus anorganischen Teilchen und Polysiloxan 10 bis 50 Gewichtsteile pro 100 Gewichtsteile der anorganischen Teilchen beträgt.

**4.** Verbund aus anorganischen Teilchen und Polysiloxan nach einem der Ansprüche 1 bis 3, wobei die Gesamtmenge von D-Einheiten, d. h. Einheiten mit $SiR^2R^3O_{2/2}$-Struktur, in dem Verbund aus anorganischen Teilchen und Polysiloxan 50 bis 1.000 Gewichtsteile pro 100 Gewichtsteile der anorganischen Teilchen beträgt, und/oder das Verhältnis zwischen der Anzahl an M-Einheiten, d. h. Einheiten mit $SiR^4R^5R^6O_{1/2}$-Struktur, und der Anzahl an D-Einheiten bis zu 0,5/1 beträgt.

**5.** Verbund aus anorganischen Teilchen und Polysiloxan nach Anspruch 1 oder 2, wobei das Verhältnis $\Sigma D/\Sigma M$ zumindest 5 beträgt.

**6.** Verbund aus anorganischen Teilchen und Polysiloxan nach einem der vorangegangenen Ansprüche, wobei für die Gruppen $R^1$, $R^2$, $R^3$, $R^4$, $R^5$ und $R^6$ $C_1$-$C_{20}$-Alkylgruppen aus Methyl, Ethyl, Propyl und Butyl ausgewählt sind, $C_2$-$C_{20}$-Alkenylgruppen Vinyl oder Allyl sind, $C_1$-$C_{10}$-Alkoxygruppen Methoxy, Ethoxy, Propoxy oder Butoxy sind, $C_6$-$C_{20}$-Arylgruppen Phenyl, Tolyl oder Xylyl sind und (Poly-)Dimethylsiloxygruppen aus 1 bis 30 Siliciumatomen bestehen.

**7.** Dispersion, die einen Verbund aus anorganischen Teilchen und Polysiloxan nach einem der Ansprüche 1 bis 6 umfasst, der in einem Medium dispergiert ist.

**8.** Dispersion nach Anspruch 7, wobei das Medium zumindest eine aus Pentan, Hexan, Heptan, Nonan, Decan, Benzol, Toluol, o-Xylol, m-Xylol, p-Xylol und einer Polysiloxanverbindung ausgewählte Verbindung ist.

**9.** Dispersion nach Anspruch 8, wobei das Medium die Polysiloxanverbindung umfasst, die zumindest eine aus Hexamethylcyclotrisiloxan, Octamethylcyclotetrasiloxan, Decamethylcyclopentasiloxan und Dodecamethylcyclohexasiloxan ausgewählte Verbindung ist.

**10.** Dispersion nach Anspruch 8, wobei das Medium die Polysiloxanverbindung umfasst, die Polydimethylsiloxan mit einer kinematischen Viskosität bei 25 °C von 50 bis 100.000 $mm^2/s$ ist.

**11.** Festes Material, das einen Verbund aus anorganischen Teilchen und Polysiloxan nach einem der Ansprüche 1 bis 6 umfasst.

**12.** Festes Material nach Anspruch 11, das ein Bindemittel umfasst, das ein Silikonharz oder Silikonkautschuk ist.

**13.** Verfahren zur Herstellung eines Verbunds aus anorganischen Teilchen und Polysiloxan nach einem der Ansprüche

1 bis 6, das die folgenden Schritte umfasst:

(a) das Bereitstellen einer Dispersion der anorganischen Teilchen in einem polaren organischen Lösungsmittel und
(b) das Vermischen der Dispersion mit zumindest einem zyklischen Siloxan der allgemeinen Formel (1) und das Unterziehen des zyklischen Siloxans in dem Gemisch einer Ringöffnungspolymerisation

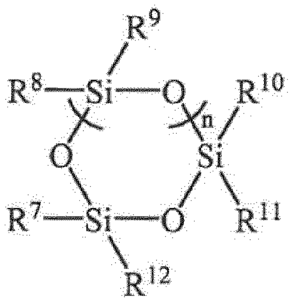

(1)

worin $R^7$, $R^8$, $R^9$, $R^{10}$, $R^{11}$, $R^{12}$ und n wie vorstehend definiert sind.

**14.** Verfahren nach Anspruch 13, wobei Schritt (a) eine Oberflächenbehandlung der anorganischen Teilchen mit einer Silanverbindung und/oder einem (partiellen) hydrolytischen Kondensat davon und das Dispergieren der Teilchen in dem polaren organischen Lösungsmittel umfasst.

**15.** Verfahren nach Anspruch 13 oder 14, wobei das polare organische Lösungsmittel in Schritt (a) zumindest ein aus Methanol, Ethanol, Isopropylalkohol und n-Propylalkohol ausgewähltes Lösungsmittel ist.

**16.** Verfahren nach einem der Ansprüche 13 bis 15, wobei Schritt (b) in Gegenwart eines Säure- oder Basenkatalysators durchgeführt wird.

**17.** Verfahren nach einem der Ansprüche 13 bis 16, wobei das zyklische Siloxan zumindest eine aus Hexamethylcyclotrisiloxan, Octamethylcyclotetrasiloxan, Decamethylcyclopentasiloxan, Dodecamethylcyclohexasiloxan und 2,4,6,8-Tetramethylcyclotetrasiloxan ausgewählte Verbindung ist.

**18.** Verfahren nach einem der Ansprüche 13 bis 17, wobei Schritt (b) eine Ringöffnungspolymerisation des zyklischen Siloxans in Gegenwart einer Silanverbindung und/oder eines hydrolytischen Kondensats davon als Polymerkettenverlängerungskomponente in einer Menge von bis zu 1 Moläquivalent in Bezug auf das zyklische Siloxan umfasst, wobei die Silanverbindung der allgemeinen Formel (2) entspricht:

$$R^{13}R^{14}Si(OR^{15})_2 \qquad (2)$$

worin $R^{13}$ und $R^{14}$ jeweils unabhängig Wasserstoff oder eine aus $C_1$-$C_{20}$-Alkylgruppen, $C_2$-$C_{20}$-Alkenylgruppen, $C_6$-$C_{20}$-Arylgruppen und (Poly-)Dimethylsiloxygruppen mit bis zu 50 Siliciumatomen ausgewählte Gruppe sind, die gegebenenfalls mit (Meth)acryl-, Oxiranyl- oder Fluorresten substituiert ist, und $R^{15}$ Wasserstoff oder eine Alkylgruppe mit bis zu 6 Kohlenstoffatomen ist.

**19.** Verfahren nach einem der Ansprüche 13 bis 18, wobei Schritt (b) eine Ringöffnungspolymerisation des zyklischen Siloxans in Gegenwart einer Siliciumverbindung als Polymerkettenterminationskomponente in einer Menge von bis zu 100 Gewichtsteilen pro 100 Gewichtsteile des zyklischen Siloxans umfasst, wobei die Siliciumverbindung der allgemeinen Formel (3) oder (4) entspricht:

$$R^{16}R^{17}R^{18}Si(X) \qquad (3)$$

$$R^{16}R^{17}R^{18}SiOSiR^{16}R^{17}R^{18} \qquad (4)$$

worin $R^{16}$, $R^{17}$ und $R^{18}$ jeweils unabhängig Wasserstoff oder eine aus $C_1$-$C_{20}$-Alkylgruppen, $C_2$-$C_{20}$-Alkenylgruppen, $C_6$-$C_{20}$-Arylgruppen und (Poly-)Dimethylsiloxygruppen mit bis zu 50 Siliciumatomen ausgewählte Gruppe sind, die gegebenenfalls mit (Meth)acryl-, Oxiranyl- oder Fluorresten substituiert ist, und X aus Alkoxy, Allyl, Acetoxy, Enol

und Chlor ausgewählt ist.

**20.** Verfahren nach einem der Ansprüche 13 bis 19, das außerdem den Schritt (c) des Entfernens des polaren organischen Lösungsmittels nach Schritt (b) umfasst.

**21.** Verfahren nach einem der Ansprüche 13 bis 20, das außerdem nach Schritt (b) einen Schritt (d) des Zusetzens eines weiteren zyklischen Siloxans der Formel (1), einer Polymerkettenverlängerungskomponente der Formel (2), wie in Anspruch 18 definiert, und/oder einer Polymerkettenterminationskomponente der Formel (3) oder (4), wie in Anspruch 19 definiert, und des erneuten Durchführens der Reaktion umfasst.

**Revendications**

**1.** Composite de particules inorganiques et de polysiloxane, comprenant
des particules inorganiques de structure cœur/gaine ayant un cœur comprenant au moins un composé choisi parmi l'oxyde d'aluminium, l'oxyde de cérium, l'oxyde de titane, l'oxyde de zinc, l'oxyde d'indium et d'étain, l'oxyde de zirconium, l'oxyde d'étain et l'oxyde de fer, et une gaine en oxyde de silicium autour du cœur, et ayant une granulométrie cumulée à 50 % de 1 à 200 nm en volume sur la base de la distribution de granulométrie telle que mesurée par le procédé de diffusion dynamique de la lumière, et
du polysiloxane contenant des motifs $SiR^2R^3O_{2/2}$ et $SiR^4R^5R^6O_{1/2}$ greffés au moins en partie sur les surfaces des particules, éventuellement via une couche de revêtement en siloxane contenant des motifs $SiR^1O_{3/2}$, dans lequel la quantité totale des constituants siloxane représentés par les motifs $SiR^1O_{3/2}$, $SiR^2R^3O_{2/2}$ et $SiR^4R^5R^6O_{1/2}$ est de 20 à 20 000 parties en poids pour 100 parties en poids des particules inorganiques et le rapport $\sum D/\sum M$ vaut au moins 3, où $\sum D$ est la valeur intégrée de signaux de RMN attribués à tous les motifs D ($SiR^2R^3O_{2/2}$) lors d'une analyse par spectroscopie de résonance magnétique nucléaire (RMN) du $^{29}Si$, et $\sum M$ est la valeur intégrée de signaux de RMN attribués à tous les motifs M ($SiR^4R^5R^6O_{1/2}$), qui peut être obtenu par mise en œuvre d'une polymérisation par décyclisation de siloxane cyclique de formule (1) :

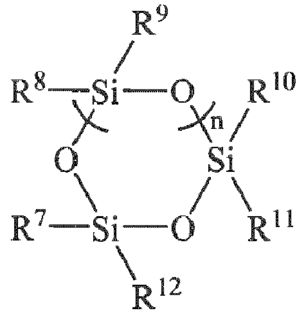

(1)

dans une dispersion des particules inorganiques ;
dans lequel, dans les formules $SiR^1O_{3/2}$, $SiR^2R^3O_{2/2}$ et $SiR^4R^5R^6O_{1/2}$ :

chaque $R^1$ est indépendamment l'hydrogène ou un groupe choisi parmi un groupe alkyle en $C_1$ à $C_{20}$, un groupe alcényle en $C_2$ à $C_{20}$, un groupe aryle en $C_6$ à $C_{20}$ et un groupe (poly)diméthylsiloxy ayant jusqu'à 50 atomes de silicium, lequel groupe peut être substitué par un radical (méth)acrylique, oxiranyle, amino, mercapto, isocyanate ou fluor,
chaque $R^2$, $R^3$, $R^4$ et $R^5$ est indépendamment l'hydrogène ou un groupe choisi parmi un groupe alkyle en $C_1$ à $C_{20}$, un groupe alcényle en $C_2$ à $C_{20}$, un groupe aryle en $C_6$ à $C_{20}$ et un groupe (poly)diméthylsiloxy ayant jusqu'à 50 atomes de silicium, lequel groupe peut être substitué par un radical (méth)acrylique, oxiranyle ou fluor, et
$R^6$ est l'hydrogène ou un groupe choisi parmi un groupe alkyle en $C_1$ à $C_{20}$, un groupe alcényle en $C_2$ à $C_{20}$, un groupe aryle en $C_6$ à $C_{20}$, un groupe (poly) diméthylsiloxy ayant jusqu'à 50 atomes de silicium, un groupe alcoxy en $C_1$ à $C_{10}$ et un groupe hydroxyle, lequel groupe peut être substitué par un radical (méth)acrylique, oxiranyle ou fluor,
et dans lequel, dans la formule (1) ci-dessus :
chacun de $R^7$, $R^8$, $R^9$, $R^{10}$, $R^{11}$ et $R^{12}$ est indépendamment l'hydrogène ou un groupe choisi parmi un groupe

alkyle en $C_1$ à $C_{20}$, un groupe alcényle en $C_2$ à $C_{20}$, un groupe aryle en $C_6$ à $C_{20}$ et un groupe (poly)diméthylsiloxy ayant jusqu'à 50 atomes de silicium, lequel groupe peut être substitué par un radical (méth)acrylique, oxiranyle ou fluor, et n est un entier de 0 à 10.

**2.** Composite de particules inorganiques et de polysiloxane selon la revendication 1, contenant le composant polysiloxane du composite en une quantité de 50 à 10 000 parties en poids pour 100 parties en poids des particules inorganiques.

**3.** Composite de particules inorganiques et de polysiloxane selon la revendication 1 ou 2, dans lequel le total des motifs T, c'est-à-dire des motifs de structure $SiR^1O_{3/2}$, dans le composite de particules inorganiques et de polysiloxane, est de 10 à 50 parties en poids pour 100 parties en poids des particules inorganiques.

**4.** Composite de particules inorganiques et de polysiloxane selon l'une quelconque des revendications 1 à 3, dans lequel le total des motifs D, c'est-à-dire des motifs de structure $SiR^2R^3O_{2/2}$, dans le composite de particules inorganiques et de polysiloxane, est de 50 à 1 000 parties en poids pour 100 parties en poids des particules inorganiques, et/ou le rapport du nombre de motifs M, c'est-à-dire de motifs de structure $SiR^4R^5R^6O_{1/2}$, au nombre de motifs D, va jusqu'à 0,5/1.

**5.** Composite de particules inorganiques et de polysiloxane selon la revendication 1 ou 2, dans lequel le rapport $\sum D/\sum M$ vaut au moins 5.

**6.** Composite de particules inorganiques et de polysiloxane selon l'une quelconque des revendications précédentes, dans lequel, pour les groupes $R^1$, $R^2$, $R^3$, $R^4$, $R^5$ et $R^6$, les groupes alkyle en $C_1$ à $C_{20}$ sont choisis parmi méthyle, éthyle, propyle et butyle, les groupes alcényle en $C_2$ à $C_{20}$ sont vinyle ou allyle, les groupes alcoxy en $C_1$ à $C_{10}$ sont méthoxy, éthoxy, propoxy ou butoxy, les groupes aryle en $C_6$ à $C_{20}$ sont phényle, tolyle ou xylyle, et les groupes (poly)diméthylsiloxy ont de 1 à 30 atomes de silicium.

**7.** Dispersion comprenant un composite de particules inorganiques et de polysiloxane de l'une quelconque des revendications 1 à 6 dispersé dans un milieu.

**8.** Dispersion selon la revendication 7, dans laquelle le milieu est au moins un composé choisi parmi le pentane, l'hexane, l'heptane, le nonane, le décane, le benzène, le toluène, l'o-xylène, le m-xylène, le p-xylène et un composé polysiloxane.

**9.** Dispersion selon la revendication 8, dans laquelle le milieu comprend un dit composé polysiloxane qui est au moins un composé choisi parmi l'hexaméthylcyclotrisiloxane, l'octaméthylcyclotétra-siloxane, le décaméthylcyclopentasiloxane et le dodécaméthylcyclohexasiloxane.

**10.** Dispersion selon la revendication 8, dans laquelle le milieu comprend un dit composé polysiloxane qui est un polydiméthylsiloxane ayant une viscosité cinématique de 50 à 100 000 $mm^2/s$ à 25°C.

**11.** Matériau solide comprenant un composite de particules inorganiques et de polysiloxane de l'une quelconque des revendications 1 à 6.

**12.** Matériau solide selon la revendication 11, comprenant un liant qui est une résine siliconée ou un caoutchouc siliconé.

**13.** Procédé pour préparer un composite de particules inorganiques et de polysiloxane de l'une quelconque des revendications 1 à 6, comprenant les étapes suivantes :

(a) obtention d'une dispersion desdites particules inorganiques dans un solvant organique polaire, et
(b) mélange de la dispersion avec au moins un siloxane cyclique de formule générale (1), et soumission du siloxane cyclique dans le mélange à une polymérisation par décyclisation,

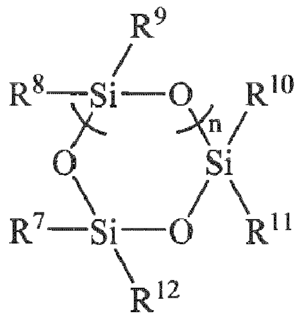

(1)

dans laquelle $R^7$, $R^8$, $R^9$, $R^{10}$, $R^{11}$, $R^{12}$ et n sont tels que définis ci-dessus.

**14.** Procédé selon la revendication 13, dans lequel l'étape (a) comprend un traitement de surface des particules inorganiques avec un composé silane et/ou un condensat hydrolytique (partiel) de celui-ci, et la dispersion des particules dans le solvant organique polaire.

**15.** Procédé selon la revendication 13 ou 14, dans lequel le solvant organique polaire dans l'étape (a) est au moins un solvant choisi parmi le méthanol, l'éthanol, l'alcool isopropylique et l'alcool n-propylique.

**16.** Procédé selon l'une quelconque des revendications 13 à 15, dans lequel l'étape (b) est mise en œuvre en présence d'un catalyseur acide ou basique.

**17.** Procédé selon l'une quelconque des revendications 13 à 16, dans lequel le siloxane cyclique est au moins un composé choisi parmi l'hexaméthylcyclotrisiloxane, l'octaméthylcyclotétra-siloxane, le décaméthylcyclopentasiloxane, le dodécaméthylcyclohexasiloxane, et le 2,4,6,8-tétraméthylcyclotétrasiloxane.

**18.** Procédé selon l'une quelconque des revendications 13 à 17, dans lequel l'étape (b) comprend une polymérisation par décyclisation du siloxane cyclique en présence d'un composé silane et/ou d'un condensat hydrolytique de celui-ci en tant que composant d'allongement de chaîne polymère, en une quantité allant jusqu'à 1 équivalent molaire sur la base du siloxane cyclique, le composé silane répondant à la formule générale (2) :

$$R^{13}R^{14}Si(OR^{15})_2 \qquad (2)$$

dans laquelle chacun de $R^{13}$ et $R^{14}$ est l'hydrogène ou un groupe choisi parmi un groupe alkyle en $C_1$ à $C_{20}$, un groupe alcényle en $C_2$ à $C_{20}$, un groupe aryle en $C_6$ à $C_{20}$ et un groupe (poly)diméthylsiloxy ayant jusqu'à 50 atomes de silicium, qui peut être substitué par un radical (méth)acrylique, oxiranyle ou fluor, et $R^{15}$ est l'hydrogène ou un groupe alkyle ayant jusqu'à 6 atomes de carbone.

**19.** Procédé selon l'une quelconque des revendications 13 à 18, dans lequel l'étape (b) comprend une polymérisation par décyclisation du siloxane cyclique en présence d'un composé siliconé en tant que composant de terminaison de chaîne polymère, en une quantité allant jusqu'à 100 parties en poids pour 100 parties en poids du siloxane cyclique, le composé siliconé répondant à la formule générale (3) ou (4) :

$$R^{16}R^{17}R^{18}Si\ (X) \qquad (3)$$

$$R^{16}R^{17}R^{18}SiOSiR^{16}R^{17}R^{18} \qquad (4)$$

formules dans lesquelles chacun de $R^{16}$, $R^{17}$ et $R^{18}$ est indépendamment l'hydrogène ou un groupe choisi parmi un groupe alkyle en $C_1$ à $C_{20}$, un groupe alcényle en $C_2$ à $C_{20}$, un groupe aryle en $C_6$ à $C_{20}$ et un groupe (poly) diméthylsiloxy ayant jusqu'à 50 atomes de silicium, qui peut être substitué par un radical (méth)acrylique, oxiranyle ou fluor, et X est choisi parmi alcoxy, allyle, acétoxy, énol et le chlore.

**20.** Procédé selon l'une quelconque des revendications 13 à 19, comprenant en outre l'étape (c) consistant à éliminer le solvant organique polaire après l'étape (b).

**21.** Procédé selon l'une quelconque des revendications 13 à 20, comprenant en outre, après l'étape (b), une étape (d) consistant à ajouter encore du siloxane cyclique de formule (1), un composant d'allongement de chaîne polymère de formule (2) tel que défini dans la revendication 18 et/ou un composant de terminaison de chaîne polymère de formule (3) ou (4) tel que défini dans la revendication 19, et à mettre en œuvre de nouveau la réaction.

# FIG.1

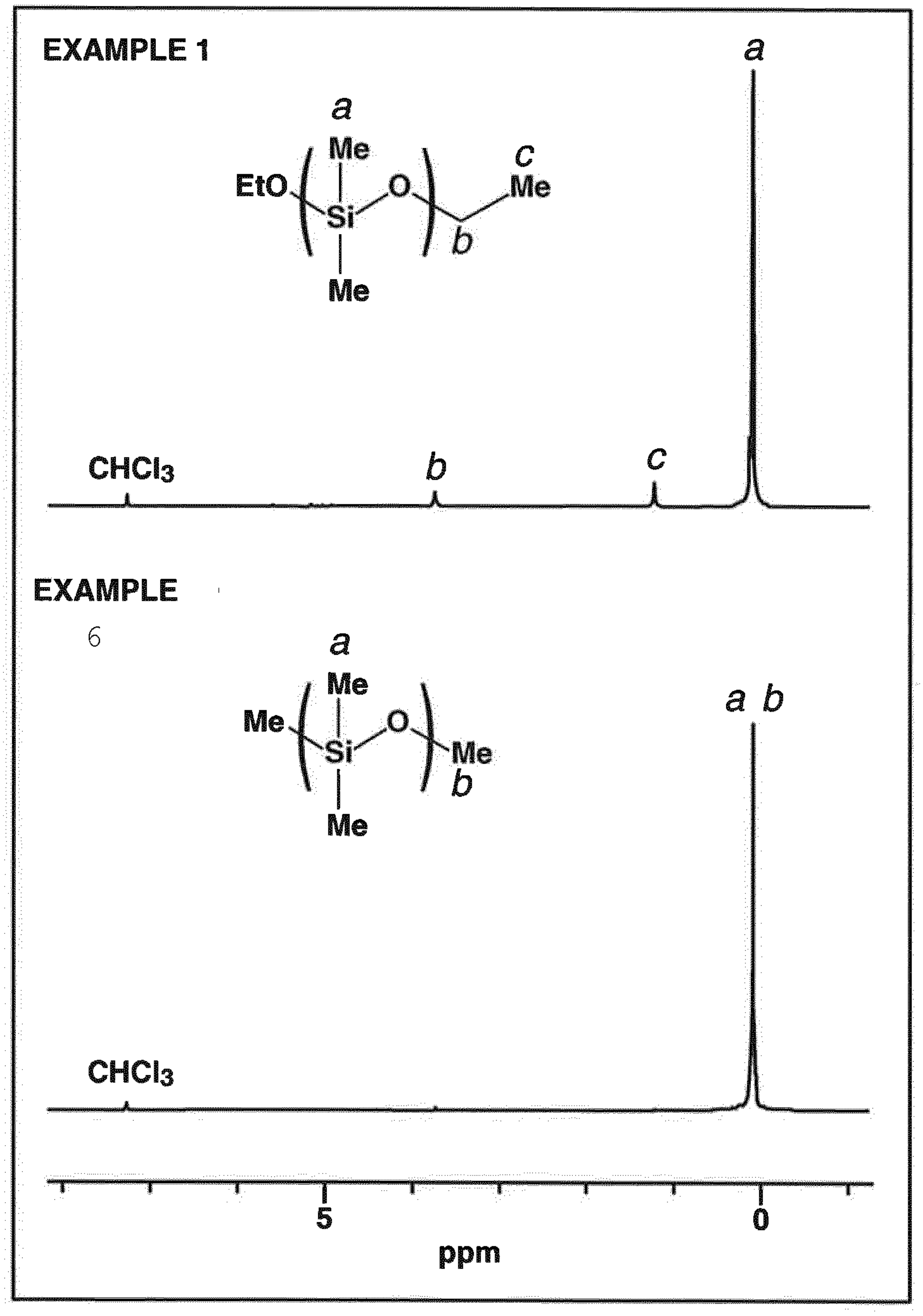

FIG.2

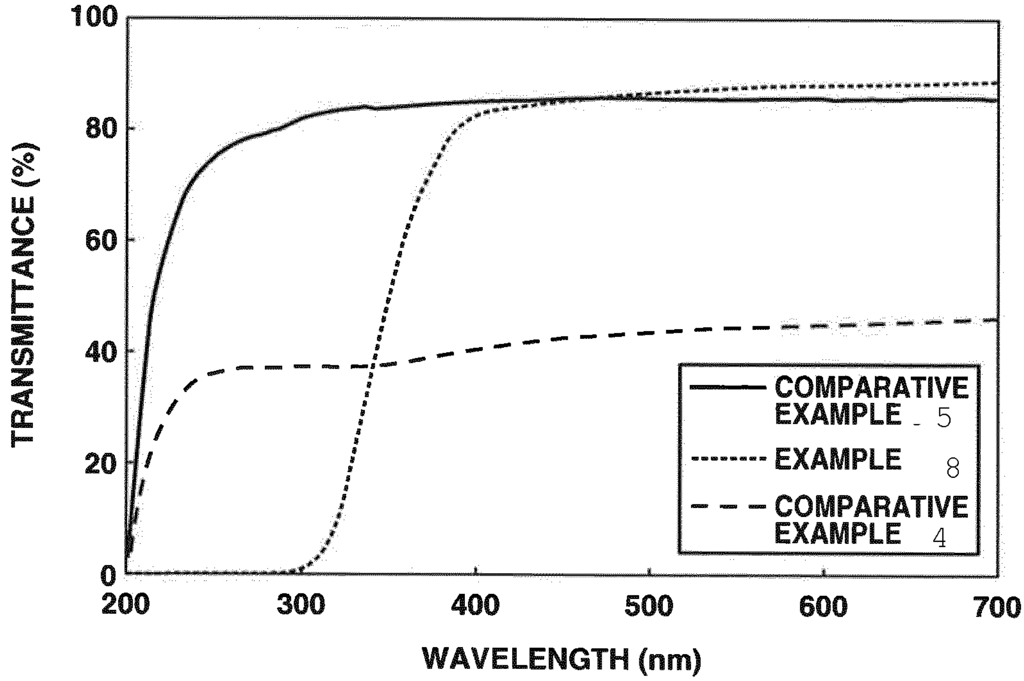
100
80
60
40
20
0
TRANSMITTANCE (%)
200
300
400
500
600
700
WAVELENGTH (nm)
COMPARATIVE EXAMPLE 5
EXAMPLE 8
COMPARATIVE EXAMPLE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2015118483 A
- JP 5353843 B
- JP 2013035890 A
- JP 2015034106 A
- JP 5472543 B
- US 2015021643A A
- WO 2013094738 A
- JP 5704133 B


### Non-patent literature cited in the description


- *Organometallics,* 2008, vol. 27 (4), 500-502
- **UENO et al.** Fabrication of porous magnesium spinel with cylindrical pores by unidirectional solidification. *Journal of Physics: Conference Series,* 2009, vol. 165 (1
- **ZHANG, GUO-CHANG et al.** *MgAl2O Ultrafiltration Ceramic Membrane Derived from Mg-Al Double Alkoxide,* 2000, vol. 2000 (03